(19) Europäisches Patentamt / European Patent Office / Office européen des brevets

(11) **EP 3 278 173 B1**

(12) **EUROPÄISCHE PATENTSCHRIFT**

(45) Veröffentlichungstag und Bekanntmachung des Hinweises auf die Patenterteilung:
**30.10.2024 Patentblatt 2024/44**

(21) Anmeldenummer: **16701927.2**

(22) Anmeldetag: **26.01.2016**

(51) Internationale Patentklassifikation (IPC):
**G02C 7/02** *(2006.01)* **G02C 7/06** *(2006.01)*

(52) Gemeinsame Patentklassifikation (CPC):
**G02C 7/065; G02C 7/028**

(86) Internationale Anmeldenummer:
**PCT/EP2016/051554**

(87) Internationale Veröffentlichungsnummer:
**WO 2016/155900 (06.10.2016 Gazette 2016/40)**

(54) **COMPUTER-IMPLEMENTIERTES VERFAHREN ZUM ERSTELLEN EINES DESIGNS EINER REZEPTFLÄCHE EINER MULTIFOKALLINSE UND MULTIFOKALLINSE MIT EINER SOLCHEN REZEPTFLÄCHE**

COMPUTER-IMPLEMENTED METHOD FOR CREATING A DESIGN OF A PRESCRIPTION SURFACE OF A MULTIFOCAL LENS AND MULTIFOCAL LENS COMPRISING SUCH A PRESCRIPTION SURFACE

PROCÉDÉ DE CONCEPTION PAR ORDINATEUR D'UNE FACE DE RÉCEPTION D'UNE LENTILLE MULTIFOCALE ET LENTILLE MULTIFOCALE POURVUE D'UNE TELLE FACE DE RÉCEPTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2015 DE 102015205721**

(43) Veröffentlichungstag der Anmeldung:
**07.02.2018 Patentblatt 2018/06**

(73) Patentinhaber: **Rodenstock GmbH
80687 München (DE)**

(72) Erfinder:
- **ALTHEIMER, Helmut
  87650 Baisweil (DE)**
- **BECKEN, Wolfgang
  81379 München (DE)**
- **ESSER, Gregor
  80686 München (DE)**
- **MÜLLER, Werner
  75443 Ötisheim (DE)**
- **MUSCHIELOK, Adam
  81369 München (DE)**
- **ZIMMERMANN, Martin
  85253 Erdweg (DE)**

(74) Vertreter: **Müller-Boré & Partner
Patentanwälte PartG mbB
Friedenheimer Brücke 21
80639 München (DE)**

(56) Entgegenhaltungen:
EP-A1- 0 291 094    WO-A1-2012/089234
DE-A1- 102010 052 936    DE-A1- 102011 009 473
FR-A1- 2 858 693

**Beschreibung**

Die vorliegende Erfindung betrifft ein Computer-implementiertes Verfahren zum Erstellen eines Designs einer Rezeptfläche einer Multifokallinse zum Zweck der Verwendung des Designs für die Herstellung einer Multifokallinse, sowie eine Multifokallinse mit einer solchen Rezeptfläche, jeweils insbesondere für ein Gleitsichtbrillenglas.

Die Berechnung und Optimierung von Gleitsichtbrillengläsern in der jeweiligen Gebrauchssituation hat in den letzten Jahren einen hohen technischen und optischen Standard erreicht. Bei nicht online optimierten Gleitsichtbrillengläsern wird als Rezeptfläche eine torische oder eine asphärische/atorische Fläche verwendet. Diese konventionellen Rezeptflächen sind bei Blankprodukten die zweite Fläche, bei welcher es sich typischerweise um die augenseitige Fläche / Rückfläche handelt, und bei moderneren Freiformprodukten, bei denen die progressive Wirkung und die Rezeptwirkung mit einer Fläche erzeugt werden, Überlagerungsflächen auf eine zuvor berechnete bzw. optimierte Basisfläche. In letztgenanntem Fall wird eine Funktion der Überlagerungsfläche auf eine Funktion der Basisfläche aufaddiert. Diese Basisflächen werden für bestimmte, meist sphärische Wirkungen unter Berücksichtigung von Standardparametern für die Lage der Gläser vor dem Auge des Brillenträgers (z.B. Hornhautscheitelabstand (HSA), Vorneigung (VN), Fassungsscheibenwinkel (FSW)) und von physiologischen Parametern (z.B. Pupillendistanz (PD)) optimiert und entweder als fertige Flächen bei konventionellen Blankprodukten gefertigt oder als Datensatz hinterlegt.

Die Rezeptwirkung (Verordnung (insbesondere Sphäre, Zylinder, Achse, gegebenenfalls Addition) in einer Gebrauchssituation oder Verordnung bei gebrauchsstellungsunabhängiger Messung mit einem Scheitelbrechwertmessgerät) ist damit herkömmlicherweise exakt nur an einem Bezugspunkt einstellbar, selbst wenn die individuellen Parameter bei der Berechnung der Rezeptfläche berücksichtigt werden. Bei Standard-Gleitsichtbrillengläsern ist dieser Punkt normalerweise der Fernbezugspunkt und bei Nahkomfortgläsern in der Regel der Nahbezugspunkt. Im zweiten wichtigen Bezugspunkt (Nahbezugspunkt bzw. Fernbezugspunkt) können dann je nach Rezeptwirkung, Lage im Basiskurvenbereich, Addition, Gebrauchsstellungsparameter und Sehmodell größere Abweichungen von der Sollwirkung auftreten.

Speziell Größen, die von der individuellen Rezeptwirkung und Gebrauchssituation abhängen und deshalb in der progressiven Basisfläche nicht berücksichtigt werden können, wie zum Beispiel der Einstellastigmatismus (vgl. z.B. DE 10 2010 052 936 A1; "Refraktionsbestimmung" von H. Diepes, 3. überarbeitete Auflage, DOZ-Verlag, 2004, S. 396ff.; "Einstellastigmatis und Listing'sche Regel" von K. Jeremias, D. Urech, Projektarbeit 5, Fachhochschule Nordwestschweiz 2011; http://www.knecht. optiklexikon.com/index.php?rubrik=1&buchstabe=E&action=lexikon) bei astigmatischer Verordnung oder ein individueller Nahastigmatismus (vgl. z.B. "Nahastigmatismus in Theorie und Praxis, Ursachen, Häufigkeit und Prüfmethoden" von S. Degle, Deutsche Optiker Zeitung DOZ, 07/2011, S. 56-58; "Refraktionsbestimmung" von H. Diepes, 3. überarbeitete Auflage, DOZ-Verlag, 2004, S. 396ff.), können mit einer konventionellen Rezeptfläche nicht korrigiert werden. Ebenso können nur die im Voraus hinterlegten Additionen erzeugt werden. Zwischenwerte als Rezeptwerte sind ausgeschlossen. Bei solchen Fällen musste bisher in der Regel eine aufwändige und teure Online-Optimierung der progressiven Freiformfläche oder der atorischen Rezeptfläche durchgeführt werden, wenn eine optimale Korrektionswirkung in beiden Bezugspunkten erreicht werden soll. Das Dokument DE102010052936 A1 bezieht sich allenfalls auf eine Interpolation der Rezeptflächenwerte aus Bezugspunkten und nicht aus den Parametersätzen der Rezeptflächengleichung für die Bezugspunkte.

Der Erfindung liegt die Aufgabe zugrunde, ein verbessertes Verfahren zum Erstellen eines Designs einer Rezeptfläche einer Multifokallinse zu schaffen, mit dem eine einfache Berechnung der Rezeptfläche an zwei Bezugspunkten ermöglicht wird, die zwei unterschiedlichen Gebrauchssituationen entsprechen. Unter einer Berechnung der Rezeptfläche soll in diesem Zusammenhang ein Erstellen eines Designs einer Rezeptfläche verstanden werden. In Weiterentwicklung der Erfindung ist es auch Aufgabe der Erfindung, ein Verfahren zum Erstellen eines Designs einer Rezeptfläche einer Multifokallinse zu schaffen, mit welchem beliebige Rezeptwirkungen im Fern- und Nahbezugspunkt realisiert werden können, ohne dass eine ganzflächige Optimierung, welche typischerweise hoch rechenintensiv ist, durchgeführt werden muss.

Diese Aufgabe wird gelöst durch die Lehre der unabhängigen Ansprüche. Besonders vorteilhafte Ausgestaltungen der Erfindung sind Gegenstand der abhängigen Ansprüche.

Das Computer-implementierte Verfahren zum Erstellen eines Designs einer Rezeptfläche einer Multifokallinse gemäß der Erfindung ist Gegenstand des Anspruchs 1.

Gemäß der Erfindung findet eine optimale Einstellung der Rezeptfläche an einem ersten Bezugspunkt und an einem zweiten Bezugspunkt statt. Der Übergang zwischen diesen beiden Bezugspunkten erfolgt gemäß der Erfindung durch eine Interpolation von Parametersätzen der Rezeptflächengleichung aus den ersten und zweiten Parametersätzen der Rezeptflächengleichung an den beiden Bezugspunkten. Erfindungsgemäß wird vorgeschlagen, nicht zum Beispiel direkt die Rezeptflächenwerte der Rezeptfläche zwischen den zwei Bezugspunkten zu interpolieren, sondern die die Rezeptflächengleichung bestimmenden Parametersätze. Auf diese Weise lässt sich ein optisch verbesserter Übergang der Rezeptfläche zwischen den zwei Bezugspunkten erzielen.

Mit dem Verfahren der Erfindung kann ein Design einer Rezeptfläche einer Multifokallinse mit einem überschaubaren Rechenaufwand technisch und optisch hochwertig erstellt werden, wobei eine Optimierung an zwei Bezugspunkten für unterschiedliche Gebrauchssituation eingeschlossen ist.

Bei dem Verfahren der Erfindung handelt es sich vorzugsweise um ein computerimplementiertes Verfahren.

Das Verfahren der Erfindung ist insbesondere geeignet zum Erstellen von Designs von Rezeptflächen von Multifokallinsen für Gleitsichtbrillengläser. Unter einer Multifokallinse wird eine ophthalmische Linse verstanden, bei welcher die Brechkraft an verschiedenen Durchblickstellen unterschiedlich ist.

Die Rezeptfläche kann eine Vorderfläche der Linse, eine Rückfläche der Linse, eine Überlagerungsfläche einer Basisfläche sein, wobei es sich bei der Basisfläche um eine Vorderfläche oder eine Rückfläche der Linse handeln kann. Eine der Rezeptfläche gegenüber liegende Fläche der Multifokallinse kann bevorzugt eine sphärische Fläche, eine torische Fläche, eine asphärische Fläche oder eine atorische Fläche sein. Eine der Rezeptfläche gegenüber liegende Fläche der Multifokallinse kann eine progressive oder eine nicht-progressive Fläche sein. Unter Koordinaten der Rezeptfläche sollen in diesem Zusammenhang insbesondere Koordinaten der Rezeptfläche im eigentlichen Sinn als auch Punkte der Rezeptfläche verstanden werden.

Mit dem Verfahren der Erfindung lassen sich ohne eine zusätzliche Online-Optimierung der Rezeptfläche insbesondere auch die folgenden Vorteile erzielen:

- Einstellung der geforderten dioptrischen Wirkung an zwei Bezugspunkten,
- Erfüllung der dioptrischen Wirkung an einem Bezugspunkt und Erzielung nur kleiner Abweichungen in weiteren Punkten auf der Hauptblicklinie der Rezeptfläche,
- Korrektur des Einstellastigmatismus,
- Berücksichtigung der Listing'schen Regel für die Ferne und die Nähe,
- Korrektur einer individuellen Nahverordnung, insbesondere Betrag und Achslage eines Nahastigmatismus (vgl. z.B. D. Mething, Bestimmen von Sehhilfen, 2. Auflage 1996, Kapitel 4.5 auf Seite 117),
- Ein/Ausschalten oder Abändern von Designrefraktionsfehlern,
- Einstellung von DNEye®-Verordnungen, insbesondere von Verordnungen, in deren Berechnung objektive Messdaten (wie z.B. mittels Wellenfrontmessung mit einem Aberrometer, Autorefraktometer-Messung oder dergleichen bestimmte Messdaten) eingeflossen sind, im Fernbezugspunkt und im Nahbezugspunkt,
- Umrechnung von Gläsern, die in der Gebrauchsstellung optimiert wurden, in Messstellungsgläser und umgekehrt,
- Möglichkeit der Beschreibung von Fertigungskorrekturen für die Bezugspunkte von allgemeinen Freiformflächen,
- Möglichkeit eines unterschiedlichen Flächenastigmatismus, insbesondere einer unterschiedlichen Achslage und/oder eines unterschiedlichen Betrags des Astigmatismus, im Fern- und Nahbereich.

Unter einer Rezeptflächengleichung soll in diesem Zusammenhang jede Art von Gleichung verstanden werden, die zur Beschreibung der Rezeptfläche unter Verwendung eines Parametersatzes, d.h. wenigstens eines Parameters, geeignet ist. Gemäß der Erfindung kann die gesamte Rezeptfläche mit einer einzigen Rezeptflächengleichung beschrieben werden, wobei die Parameter der Rezeptflächengleichung an verschiedenen Koordinaten der Rezeptfläche vorzugsweise unterschiedlich sind, wobei sich die Parameter der Rezeptflächengleichung auf kontrollierte Weise ändern.

Unter einer Interpolation soll in diesem Zusammenhang jede Art von Berechnung von weiteren Werten an anderen Koordinaten ausgehend von wenigstens zwei vorgegebenen Werten (hier: erster und zweiter Parametersatz) an vorbestimmten Koordinaten verstanden werden. Insbesondere soll der Begriff der Interpolation neben linearen auch nicht-lineare Interpolationen umfassen. Auch soll der Begriff der Interpolation nicht nur Werteberechnungen zwischen den zwei vorgegebenen Werten umfassen, sondern auch Berechnungen von Werten jenseits der vorgegebenen Werte (kann auch als Extrapolation bezeichnet werden) und von Werten neben der direkten Verbindungslinie zwischen den vorgegebenen Werten.

Vorzugsweise können die Rezeptflächenwerte $z(u,v)$ in einem u/v-Koordinatensystem in Schritt S40 durch Pfeilhöhen der Rezeptfläche nach der folgenden Gleichung, nach der jeder Meridianschitt mit einem Kreis beschrieben wird, bestimmt werden:

$$z(u,v) = \frac{r^2 c}{1 + \sqrt{1 - r^2 c^2}}$$

$$c = c_u \cos^2 \alpha + c_v \sin^2 \alpha = c_u \frac{u^2}{r^2} + c_v \frac{v^2}{r^2}$$

mit der Meridionalkrümmung                und $r^2 = u^2 + v^2$.

Die Koordinaten $(u,v)$ werden dabei aus den Koordinaten $(x,y)$ und aus der Achslage $\alpha$ des Meridianschnittes ermittelt. Vorzugsweise ist dieses u/v-Koordinatensystem abhängig von der Orientierung der jeweiligen Rezeptflächengleichung. In dem jeweiligen u/v-Koordinatensystem kann die jeweilige Rezeptflächengleichung besonders einfach beschrieben werden. Die Koordinatenachsen u und v sind dabei die Richtungen der Hauptschnitte der jeweiligen Rezeptflächengleichung. Der Ursprung aller u/v-Koordinatensysteme ist immer derselbe, und fällt mit dem Ursprung des x/y-Koordinatensystems der jeweiligen Fläche (Vorder- oder Rückfläche) zusammen.

Vorzugsweise kann die Rezeptflächengleichung auch eine Torusgleichung oder eine Gleichung einer analytisch beschreibbaren atorischen Fläche, wie z.B. in EP 1 240 541 B1 angegeben, sein.

Vorzugsweise kann die Interpolation der weiteren Parametersätze der Rezeptflächengleichung in Schritt S30 in einem x/y-Koordinatensystem durchgeführt werden, das gegenüber dem u/v-Koordinatensystem um einen vorbestimmten Winkel um eine gemeinsame z-Achse gedreht ist. Besonders bevorzugt kann die Interpolation der weiteren Parametersätze der Rezeptflächengleichung in Schritt S30 in einem Parameterraum von Power-Vektoren durchgeführt werden.

In einer bevorzugten Ausführungsform der Erfindung kann die Interpolation der weiteren Parametersätze der Rezeptflächengleichung in Schritt S30 in einer Power-Vektor-Schreibweise der Parameter durchgeführt werden.

Vorzugsweise kann die Interpolation der weiteren Parametersätze der Rezeptflächengleichung in Schritt S30 mittels der folgenden Power-Vektor-Gleichung durchgeführt werden:

$$\vec{P}_c(x,y) = f(x,y)\vec{P}_{cF} + (1 - f(x,y))\vec{P}_{cN} \; ,$$

wobei $P_c(x,y)$ einen Power-Vektor an einer beliebigen Koordinate $(x,y)$ darstellt, $P_{cF}$ einen aus dem ersten Parametersatz berechneten Power-Vektor darstellt, $P_{cN}$ einen aus dem zweiten Parametersatz berechneten Power-Vektor darstellt und $f(x,y)$ eine Überführungsfunktion ist.

Die Überführungsfunktion $f(x,y)$ kann bevorzugt eine nicht-lineare Funktion sein, deren Funktionswerte entlang der y-Achse in einem Wertebereich von 0 bis 1 liegen.

Die Überführungsfunktion $f(x,y)$ kann bevorzugt eine doppelasymptotische Funktion sein.

In einer bevorzugten Ausgestaltung der Erfindung kann die Überführungsfunktion $f(x,y)$ gegeben sein durch

$$f(x,y) = 0{,}5 + \frac{1}{\pi}\arctan(\frac{y - y_0}{y_S(x)}) \; ,$$

wobei $y_S$ ein Skalierungsfaktor ist.

Der Skalierungsfaktor $y_S$ der Überführungsfunktion $f(x,y)$ kann vorzugsweise in einem Wertebereich von 4 mm bis 15 mm liegen.

Der Skalierungsfaktor $y_S$ der Überführungsfunktion $f(x,y)$ kann in einer Ausführungsform der Erfindung bevorzugt ein von der x-Koordinate abhängiger Skalierungsfaktor $y_S(x)$ sein. In einer bevorzugten Ausführungsform der Erfindung kann dieser von der x-Koordinate abhängige Skalierungsfaktor $y_S(x)$ der Überführungsfunktion $f(x,y)$ gegeben sein durch

$$y_S(x) = y_{SRand} + (y_{SZentrum} - y_{SRand})e^{\frac{-x^2}{b}}$$

mit $b = \dfrac{-(\Delta x)^2}{\ln(0{,}5)}$ , wobei $\Delta x$ die Halbwertsbreite der Gaußkurve ist.

In einer anderen bevorzugten Ausführungsform besitzt die Überführungsfunktion partielle Ableitungen nach x und y, die in den Bezugspunkten gleich Null sind. Es ist ebenfalls vorteilhaft, wenn zusätzlich die Hesse-Matrix der Überführungsfunktion bezüglich x und y an den Bezugspunkten die Nullmatrix ist, d.h. wenn zusätzlich die zweiten partiellen Ableitungen nach x und y sowie die gemischte Ableitung nach x und y gleich Null sind. In diesem Fall sind die Krümmungseigenschaften der Überlagerungsfläche an den Bezugspunkten direkt an den Koeffizienten der Torusgleichung ablesbar.

Gegenstand der Erfindung ist auch ein Verfahren zur Herstellung einer Multifokallinse mit einer Vorderfläche und einer Rückfläche, bei welchem ein Design einer Rezeptfläche nach einem oben beschriebenen Verfahren der Erfindung erstellt wird. Gegenstand der Erfindung ist ferner eine Vorrichtung zur Herstellung einer Multifokallinse mit einer Vorderfläche und einer Rückfläche, welche ein Mittel zum Erstellen eines Designs einer Rezeptfläche der Multifokallinse aufweist, welches ausgestaltet ist zum oben beschriebenen Erstellen des Designs der Rezeptfläche der Erfindung.

**EP 3 278 173 B1**

Gegenstand der Erfindung ist zudem ein Computerprogrammerzeugnis oder Computerprogramm, welches ausgestaltet ist, wenn geladen und ausgeführt auf einem Computer, ein oben beschriebenes Verfahren zum Erstellen eines Designs einer Rezeptfläche einer Multifokallinse der Erfindung auszuführen.

Gegenstand der Erfindung ist ferner ein Speichermedium mit einem darauf gespeicherten Computerprogramm, wobei das Computerprogramm ausgestaltet ist, wenn geladen und ausgeführt auf einem Computer, ein oben beschriebenes Verfahren zum Erstellen eines Designs einer Rezeptfläche einer Multifokallinse der Erfindung auszuführen.

Gemäß einem weiteren Aspekt der Erfindung weist eine Multifokallinse eine Rückfläche und eine Vorderfläche auf, wobei eine Rezeptfläche der Multifokallinse einen ersten Bezugspunkt, an dem wenigstens eine Aberration eines Auges eines Probanden für eine erste Gebrauchssituation korrigiert wird, und einen zweiten Bezugspunkt, an dem wenigstens eine Aberration des Auges des Probanden für eine zweite Gebrauchssituation korrigiert wird, aufweist; und ein Design der Rezeptfläche derart ausgestaltet ist, dass Rezeptflächenwerte der Rezeptfläche an weiteren Koordinaten der Rezeptfläche mittels einer Interpolation von weiteren Parametersätzen einer vorgegebenen Rezeptflächengleichung aus einem ersten Parametersatz der Rezeptflächengleichung am ersten Bezugspunkt und einem zweiten Parametersatz der Rezeptflächengleichung am zweiten Bezugspunkt bestimmt sind.

Vorzugsweise ist das Design der Rezeptfläche mittels eines oben beschriebenen Verfahrens der Erfindung erstellt.

Obige sowie weitere Vorteile, Merkmale und Anwendungsmöglichkeiten der Erfindung werden aus der nachfolgenden Beschreibung von Ausführungsbeispielen anhand der beiliegenden Zeichnungen besser verständlich. Darin zeigen, größtenteils schematisch:

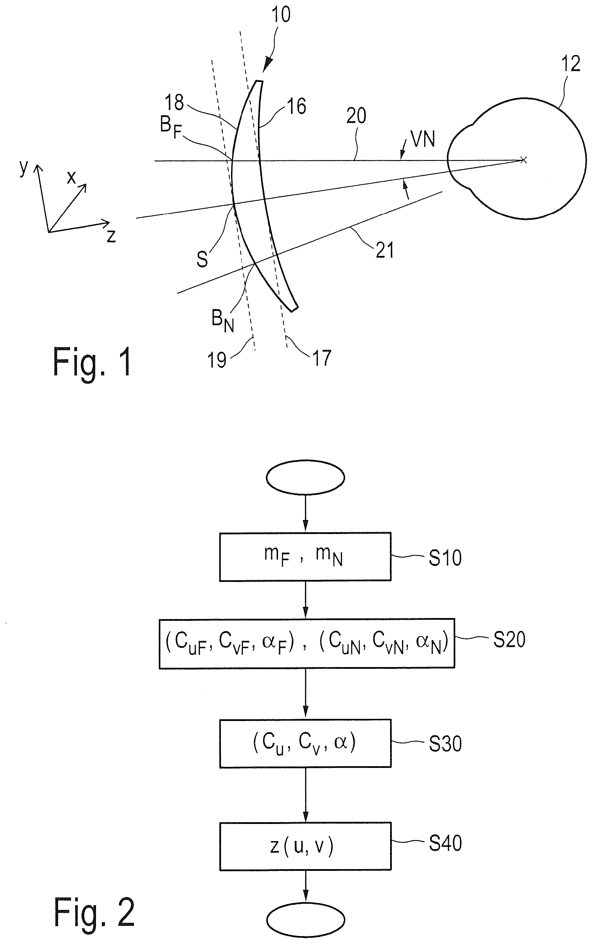

Fig. 1     eine Darstellung einer Multifokallinse gemäß einem Ausführungsbeispiel der Erfindung vor einem Auge eines Brillenträgers;

Fig. 2     ein vereinfachtes Flussdiagramm zum Erläutern eines Verfahrens zum Erstellen eines Designs einer Rezeptfläche einer Multifokallinse gemäß einem Ausführungsbeispiel der Erfindung;

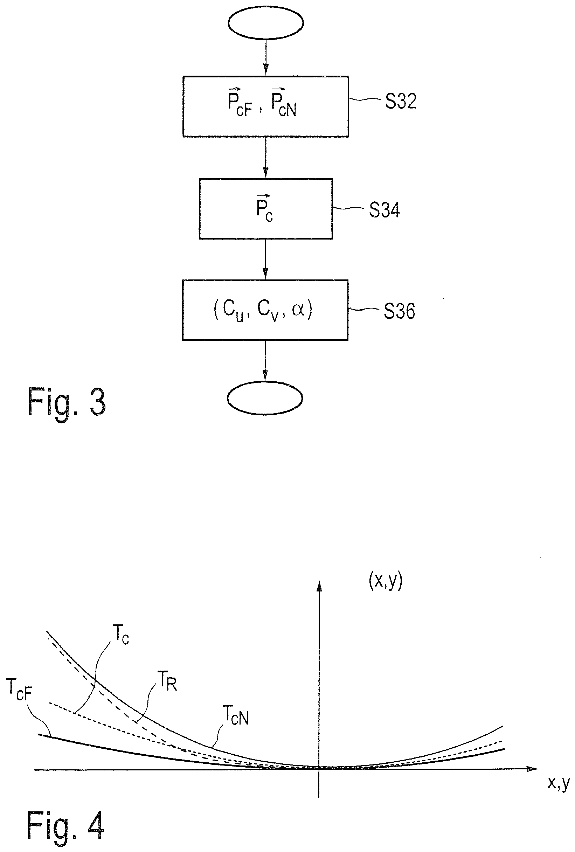

Fig. 3     ein vereinfachtes Flussdiagramm zum Erläutern eines Interpolationsschritts in dem Verfahren von Fig. 2 gemäß einem Ausführungsbeispiel der Erfindung;

Fig. 4     ein Diagramm zum Erläutern der Wirkungsweise des Interpolationsschritts von Fig. 3;

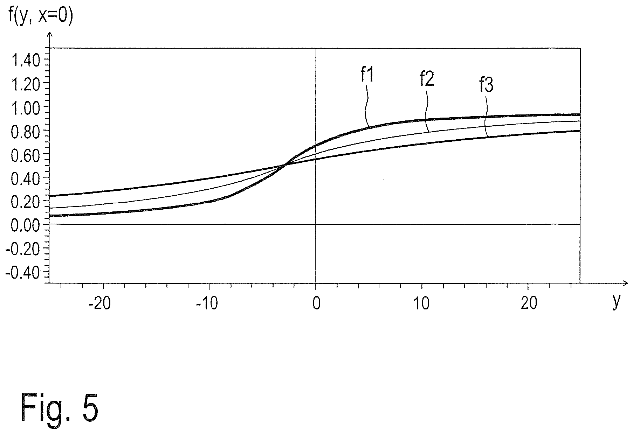

Fig. 5     ein Diagramm zur Veranschaulichung eines Verlaufs einer Überführungsfunktion entlang der x-Achse, die in dem Interpolationsschritt von Fig. 3 verwendet werden kann, gemäß einem Ausführungsbeispiel der Erfindung;

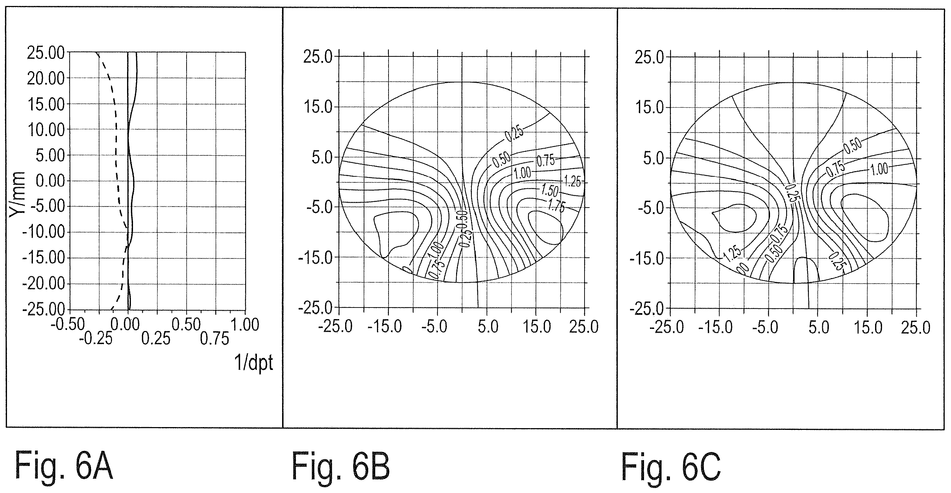

Fig. 6     Diagramme eines astigmatischen Fehlers und eines Refraktionsfehlers entlang einer Hauptblicklinie (Teilfigur A), eines astigmatischen Fehlers in der Gebrauchsstellung (Teilfigur B) und eines Flächenastigmatismus der Rückfläche (Teilfigur C) für eine herkömmliche Multifokallinse gemäß Ausführungsform 1;

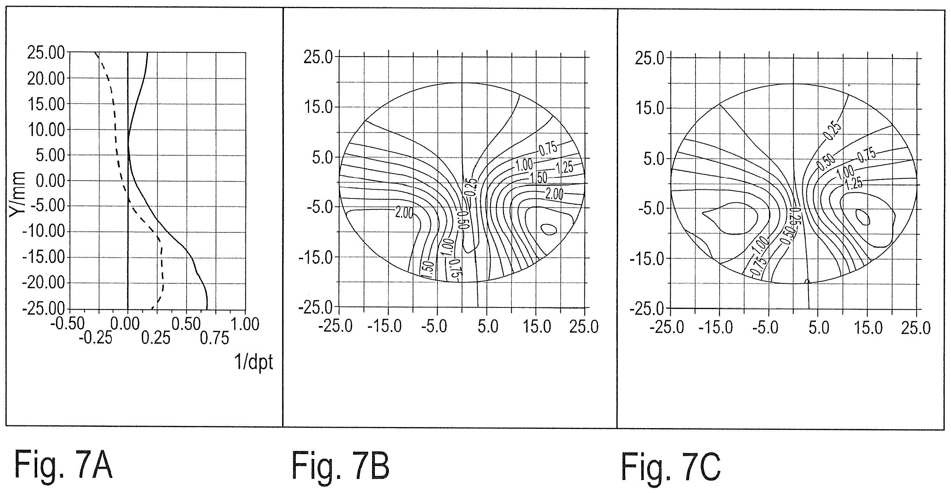

Fig. 7     Diagramme eines astigmatischen Fehlers und eines Refraktionsfehlers entlang einer Hauptblicklinie (Teilfigur A), eines astigmatischen Fehlers in der Gebrauchsstellung (Teilfigur B) und eines Flächenastigmatismus der Rückfläche (Teilfigur C) für eine herkömmliche Multifokallinse gemäß Ausführungsform 2;

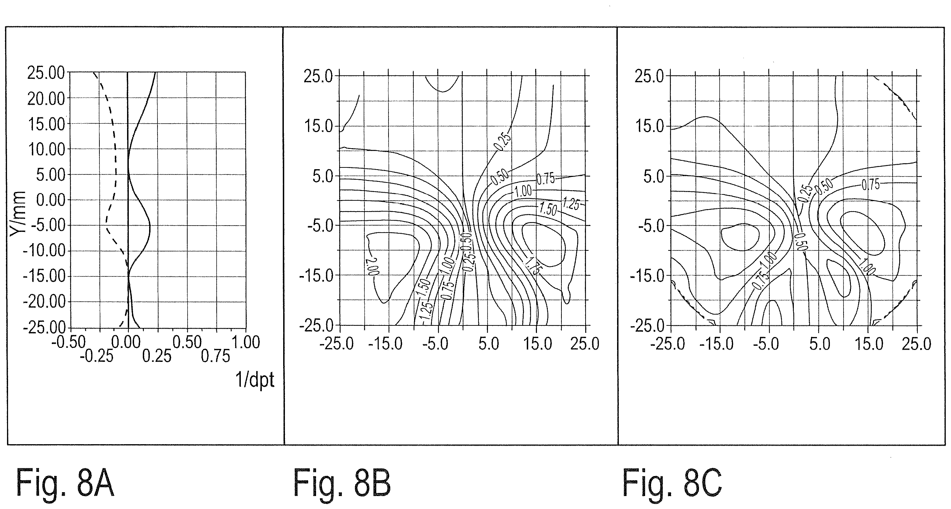

Fig. 8     Diagramme eines astigmatischen Fehlers und eines Refraktionsfehlers entlang einer Hauptblicklinie (Teilfigur A), eines astigmatischen Fehlers in der Gebrauchsstellung (Teilfigur B) und eines Flächenastigmatismus der Rückfläche (Teilfigur C) für eine erfindungsgemäße Multifokallinse gemäß Ausführungsform 3;

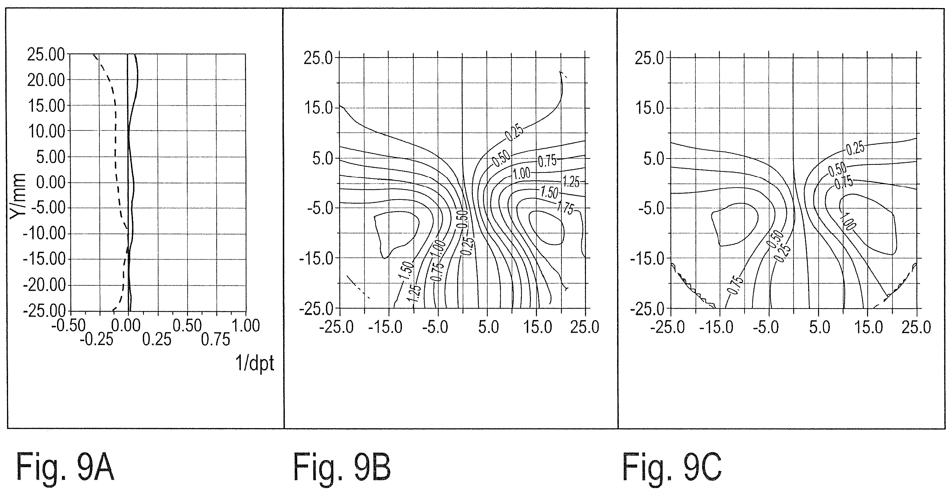

Fig. 9     Diagramme eines astigmatischen Fehlers und eines Refraktionsfehlers entlang einer Hauptblicklinie (Teilfigur A), eines astigmatischen Fehlers in der Gebrauchsstellung (Teilfigur B) und eines Flächenastigmatismus der Rückfläche (Teilfigur C) für eine herkömmliche Multifokallinse gemäß Ausführungsform 4;

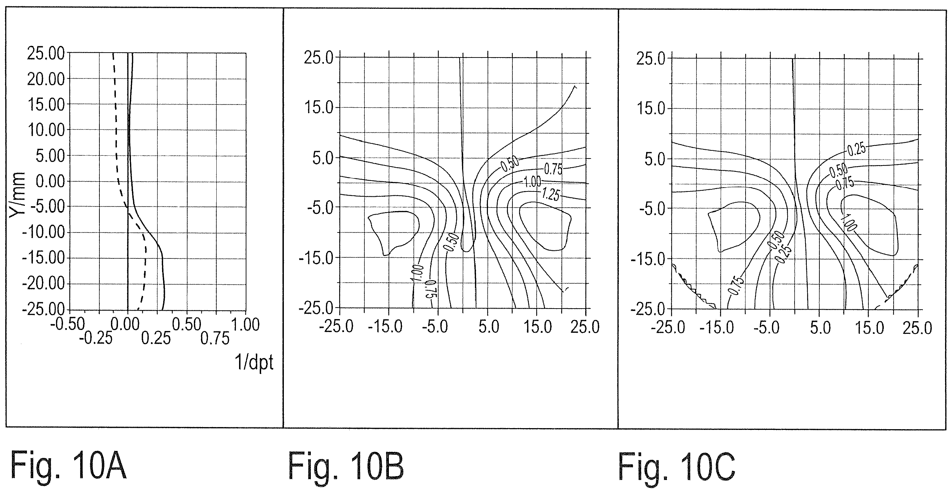

Fig. 10     Diagramme eines astigmatischen Fehlers und eines Refraktionsfehlers entlang einer Hauptblicklinie (Teilfigur A), eines astigmatischen Fehlers in der Gebrauchsstellung (Teilfigur B) und eines Flächenastigmatismus der Rückfläche (Teilfigur C) für eine herkömmliche Multifokallinse gemäß Ausführungsform 5;

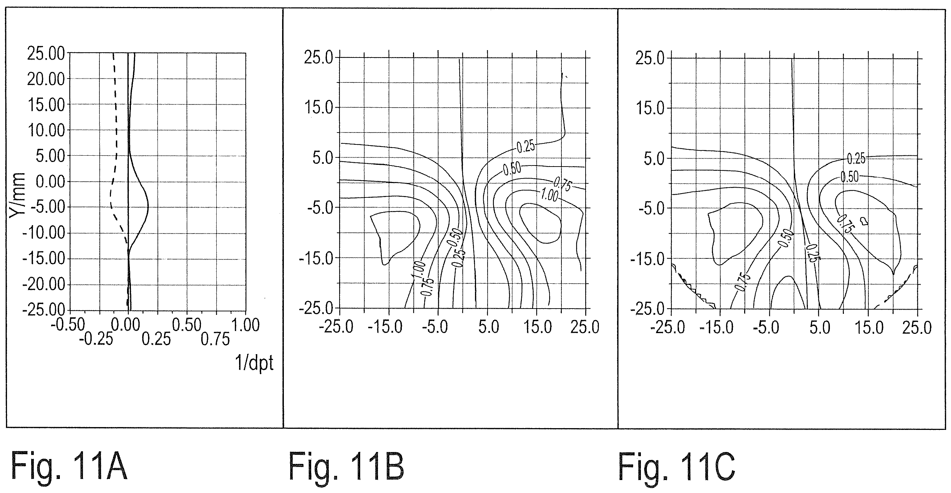

Fig. 11     Diagramme eines astigmatischen Fehlers und eines Refraktionsfehlers entlang einer Hauptblicklinie (Teilfigur A), eines astigmatischen Fehlers in der Gebrauchsstellung (Teilfigur B) und eines Flächenastigmatismus der Rückfläche (Teilfigur C) für eine erfindungsgemäße Multifokallinse gemäß Ausführungsform 6;

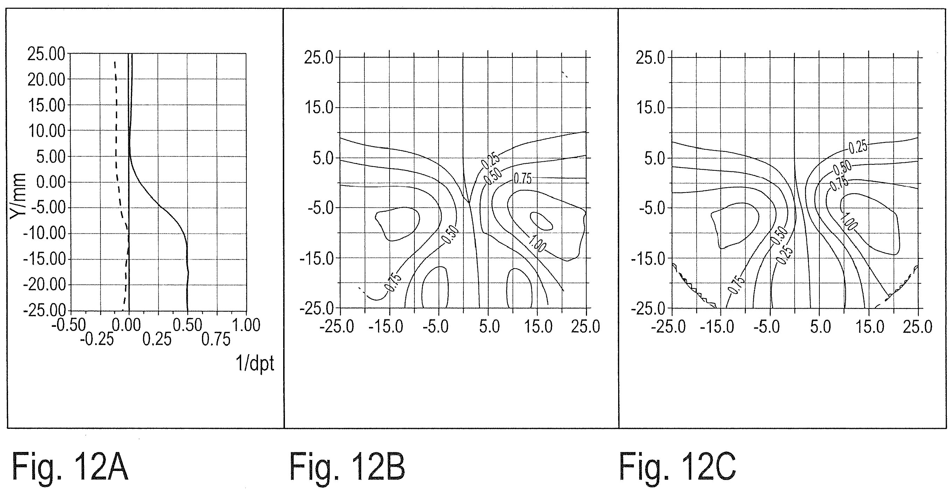

Fig. 12    Diagramme eines astigmatischen Fehlers und eines Refraktionsfehlers entlang einer Hauptblicklinie (Teilfigur A), eines astigmatischen Fehlers in der Gebrauchsstellung (Teilfigur B) und eines Flächenastigmatismus der Rückfläche (Teilfigur C) für eine herkömmliche Multifokallinse gemäß Ausführungsform 7;

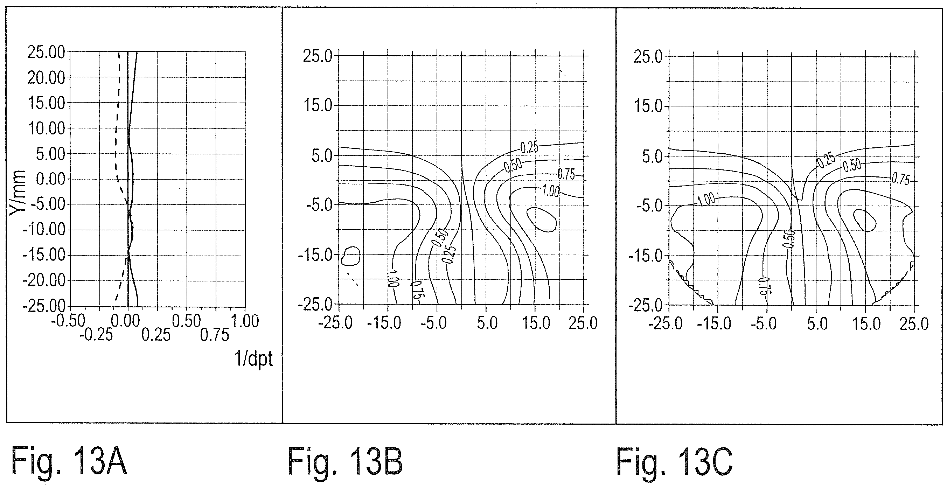

Fig. 13    Diagramme eines astigmatischen Fehlers und eines Refraktionsfehlers entlang einer Hauptblicklinie (Teilfigur A), eines astigmatischen Fehlers in der Gebrauchsstellung (Teilfigur B) und eines Flächenastigmatismus der Rückfläche (Teilfigur C) für eine erfindungsgemäßen Multifokallinse gemäß Ausführungsform 8;

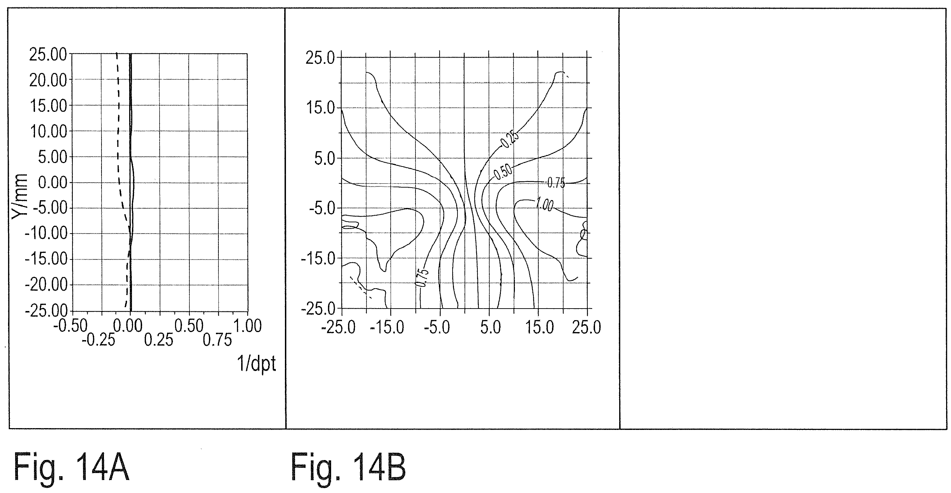

Fig. 14    Diagramme eines astigmatischen Fehlers und eines Refraktionsfehlers entlang einer Hauptblicklinie (Teilfigur A) und eines astigmatischen Fehlers in der Gebrauchsstellung (Teilfigur B) für eine herkömmliche Multifokallinse gemäß Ausführungsform 9;

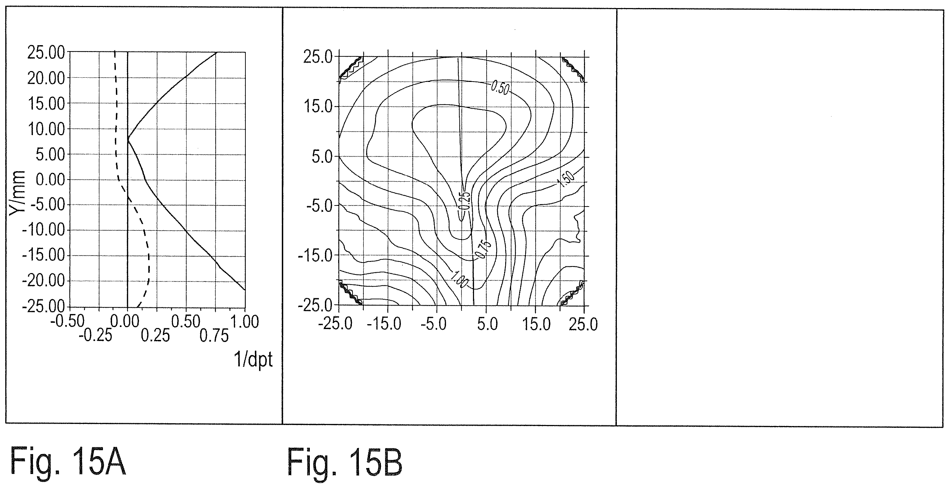

Fig. 15    Diagramme eines astigmatischen Fehlers und eines Refraktionsfehlers entlang einer Hauptblicklinie (Teilfigur A) und eines astigmatischen Fehlers in der Gebrauchsstellung (Teilfigur B) für eine herkömmliche Multifokallinse gemäß Ausführungsform 10; und

Fig. 15    Diagramme eines astigmatischen Fehlers und eines Refraktionsfehlers entlang einer Hauptblicklinie (Teilfigur A), eines astigmatischen Fehlers in der Gebrauchsstellung (Teilfigur B) und eines Flächenastigmatismus der Rückfläche (Teilfigur C) für eine erfindungsgemäße Multifokallinse gemäß Ausführungsform 11.

Fig. 1 zeigt eine Multifokallinse 10 eines Gleitsichtbrillenglases vor einem Auge 12 eines Probanden bzw. Brillenträgers. Die Multifokallinse 10 hat eine dem Auge 12 zugewandte Rückfläche 16 und eine gegenüber liegende, dem Auge abgewandte Vorderfläche 18. In Fig. 1 sind zudem eine Basisebene 17 der Rückfläche 16 und eine Basisebene 19 der Vorderfläche 18 eingezeichnet. Typischerweise bildet bzw. definiert die Basisebene 19 der Vorderfläche 18 das Brillenkoordinatensystem, in welchem beispielsweise Fern- und Nahbezugspunkte angegeben werden.

Zudem ist beispielhaft ein x/y/z-Koordinatensystem eingezeichnet. In diesem bildet die x/y-Ebene vorzugsweise die Tangentialebene an die Vorderfläche 19 im Scheitelpunkt S. Die Vorderfläche 18 und/oder die Rückfläche 16 der Multifokallinse 10 können so mittels Flächenwerten in der z-Richtung an den Koordinaten (x,y) beschrieben werden. Analog können die Rückfläche 16 und die Vorderfläche 18 der Multifokallinse 10 auch mittels Flächenwerten in der z-Richtung an den Koordinaten (u,v) eines u/v/z-Koordinatensystems, das gegenüber dem x/y/z-Koordinatensystem um einen vorbestimmten Winkel um die z-Achse gedreht ist, beschrieben werden.

Das Brillenglas 10 ist gegenüber der Vertikalen vorzugsweise um eine Vorneigung VN von zum Beispiel etwa 8° geneigt, und der Scheitelpunkt S der Vorderfläche 18 liegt vorzugsweise etwa 4 mm unterhalb der Nullblickrichtung 20. Die Nullblickrichtung 20 durchstößt die Vorderfläche 18 im Zentrierpunkt Bz.

In dem Ausführungsbeispiel von Fig. 1 ist die Vorderfläche 18 der Multifokallinse 10 beispielhaft als eine sphärische Fläche ausgestaltet und bildet die Rückfläche 18 die Rezeptfläche, die wie nachfolgend beschrieben optimal eingestellt wird. Alternativ kann die Rezeptfläche auch die Vorderfläche 18, eine Überlagerungsfläche der Vorderfläche 18 oder eine Überlagerungsfläche der Rückfläche 16 sein. Ferner kann die der Rezeptfläche gegenüber liegende Fläche alternativ auch eine asphärische, torische oder atorische Fläche sein. Zudem kann die der Rezeptfläche gegenüber liegende Fläche wahlweise als eine progressive oder eine nicht-progressive Fläche ausgestaltet sein.

Fig. 1 veranschaulicht zudem eine erste Gebrauchssituation, in welcher der Brillenträger seinen Blick im Wesentlichen entlang der Horizontalen 20 in die Ferne richtet. Der Punkt, an dem die Horizontale 20 die Vorderfläche 18 schneidet, wird typischerweise als Zentrierpunkt bezeichnet, welcher mit dem Fernbezugspunkt $B_F$ (erster Bezugspunkt der Erfindung) identisch sein kann. Häufig ist der Fernbezugspunkt $B_F$ jedoch in vertikaler Richtung weiter oben im Fernbereich der Linse, z.B. bei y = 8 mm, angeordnet. Außerdem ist in Fig. 1 eine zweite Gebrauchssituation veranschaulicht, in welcher der Brillenträger seinen Blick entlang einer Nahblickrichtung 21 in die Nähe richtet. Der Punkt, an dem die Nahblickrichtung 21 die Vorderfläche 18 schneidet, wird als Nahbezugspunkt $B_N$ (zweiter Bezugspunkt der Erfindung) bezeichnet. Nachfolgend bezieht sich der Index F jeweils auf die erste Gebrauchssituation bzw. den Fernbezugspunkt $B_F$ und bezieht sich der Index N jeweils auf die zweite Gebrauchssituation bzw. den Nahbezugspunkt $B_N$.

Die Multifokallinse 10 der vorliegenden Erfindung zeichnet sich dadurch aus, dass sie sowohl im Fernbezugspunkt $B_F$ als auch im Nahbezugspunkt $B_N$ so berechnet werden kann, dass sie die Aberrationen des Auges 12 des Brillenträgers sowohl in der ersten als auch in der zweiten Gebrauchssituation gleichzeitig korrigieren kann. Zudem ist die Rezeptfläche derart ausgestaltet, dass ein kontinuierlicher Übergang der Rezeptfläche zwischen den beiden Bezugspunkten $B_F$, $B_N$ erreicht werden kann.

Bezug nehmend auf Fig. 2 bis 5 wird nun ein Verfahren zum Erstellen eines verbesserten Designs der Rezeptfläche der Multifokallinse 10 gemäß einem Ausführungsbeispiel der Erfindung in mehr Einzelheiten erläutert. Vorzugsweise ist dabei der Einsatz eines iterativen Optimierungsverfahrens nicht erforderlich. Vorzugsweise wird das Verfahren computerimplementiert durchgeführt.

Wie in Fig. 2 dargestellt, werden in einem ersten Schritt S10 zunächst von zum Beispiel einem Optiker oder einem Augenarzt erste Daten $m_F$ zur Beschreibung einer Aberration des Auges 12 des Brillenträgers für die erste Gebrauchssituation zur Verfügung gestellt. Bei den ersten Daten $m_F$ handelt es sich vorzugsweise um Messdaten, die direkt vom Optiker oder Augenarzt gemessen werden. Ferner werden eine zweite Daten $m_N$ zur Beschreibung einer Aberration des Auges 12 für die zweite Gebrauchssituation bereitgestellt. Bei den zweiten Daten $m_N$ kann es sich ebenfalls um direkt vom Optiker oder Augenarzt gemessene Daten handeln. Alternativ können einzelne oder mehrere der zweiten Daten $m_N$ rechnerisch aus vom Optiker oder Augenarzt gemessenen oder bestimmten Daten, wie beispielsweise aus der Addition, ermittelt werden. Die Berechnung der zweiten Daten $m_N$ aus den gemessenen Daten/Werten kann insbesondere auf einem Modell des Auges basierend auf der so genannten Listing'schen Regel (insbesondere für die Nähe) erfolgen, welche die Orientierung des Auges in Abhängigkeit von der Vergenzstellung der Augen beschreibt. Die ersten und zweiten Daten $m_F$, $m_N$ werden beispielsweise mit Hilfe von Testlinsen subjektiv ermittelt (subjektive Refraktion) und als Verordnung bestehend aus Sphäre, Zylinder und Achse (SZA) bereitgestellt werden. Alternativ können mittels geeigneter Messinstrumente auch eine Aberration einer Wellenfront des Auges erfasst und so eine objektive Refraktion bestimmt werden. Diese können auch mit der subjektiven Refraktion kombiniert werden.

In einem zweiten Verfahrensschritt S20 werden aus den ersten und den zweiten Daten $m_F$, $m_N$ ein erster Parametersatz $(c_{uF}, c_{vF}, \alpha_F)$ einer die Rezeptfläche beschreibenden Rezeptflächengleichung an dem ersten Bezugspunkt $B_F$ und ein zweiter Parametersatz $(c_{uN}, c_{vN}, \alpha_N)$ der Rezeptflächengleichung an dem zweiten Bezugspunkt $B_N$ ermittelt.

Diese Ermittlung der Parametersätze aus den Daten kann beispielsweise wie folgt durchgeführt werden.

Die Berechnung erfolgt vorzugsweise mit einem Nullstellenverfahren, z.B. einer einfachen Newton-Iteration in sechs Dimensionen, wobei die sechs unabhängigen Variablen die Parametersätze $(c_{uF}, c_{vF}, \alpha_F)$ und $(c_{uN}, c_{vN}, \alpha_N)$ sind.

In den Bezugspunkten $B_F$ und $B_N$ werden mit bekannten Ray- und Wavetracing-Methoden die Istwerte des Brillenglases an der Scheitelpunktkugel mit den gegebenen Parametersätzen $(c_{uF}, c_{vF}, \alpha_F)$, $(c_{uN}, c_{vN}, \alpha_N)$ berechnet und man erhält die Brillenglaswerte $S_{BF}$ (Sphäre im Bezugspunkt $B_F$), $Z_{BF}$ (Zylinder im Bezugspunkt $B_F$), $A_{BF}$ (Achse im Bezugspunkt $B_F$), $S_{BN}$ (Sphäre im Bezugspunkt $B_N$), $Z_{BN}$ (Zylinder im Bezugspunkt $B_N$) und $A_{BN}$ (Achse im Bezugspunkt $B_N$).

Der Vergleich dieser Istwerte mit den Sollwerten (= Verordnungswerten $S_F$, $Z_F$, $A_F$ für $B_F$ und $S_N$, $Z_N$, $A_N$ für $B_N$) liefert dann die abhängigen Größen für das Newtonverfahren:

$$\Delta S_F = S_{BF} - S_F, \quad \Delta Z_F = Z_{BF} - Z_F, \quad \Delta A_F = A_{BF} - A_F$$
$$\Delta S_N = S_{BN} - S_N, \quad \Delta Z_N = Z_{BN} - Z_N, \quad \Delta A_N = A_{BN} - A_N$$

Die Newton-Iteration führt erfahrungsgemäß sehr schnell zum gewünschten Ergebnis. Natürlich können die Flächenparameter und die Abbildungseigenschaften für das Nullstellenverfahren auch in der Powervektorschreibweise formuliert werden, oder es kann ein anderes Nullstellenverfahren angewendet werden.

Bekanntermaßen bestimmt sich eine Pfeilhöhe $z(u, v)$ (Rezeptflächenwert der Erfindung im u/v-Koordinatensystem an einem Punkt bzw. an Koordinaten $(u, v)$ der Rezeptfläche, wenn u die Richtung des ersten Hauptschnittes und v die Richtung des zweiten Hauptschnittes der Verordnung sind, nach der folgenden

Gleichung, nach der jeder Meridianschitt mit einem Kreis beschrieben wird:

$$z(u,v) = \frac{r^2 c}{1 + \sqrt{1 - r^2 c^2}}$$

$$c = c_u \cos^2 \alpha + c_v \sin^2 \alpha = c_u \frac{u^2}{r^2} + c_v \frac{v^2}{r^2}$$

mit der Meridionalkrümmung und $r^2 = u^2 + v^2$.

Die Rezeptfläche besitzt die drei Freiheitsgrade $c_u$, $c_v$, $\alpha$ (Parametersatz). Demzufolge können mit diesem Flächenansatz auch genau drei Bedingungen erfüllt werden und im Fernbezugspunkt $B_F$ die Verordnung $SZA_F$ oder im Nahbezugspunkt $B_N$ die Verordnung $SZA_N$ eingestellt werden. Ein direktes Überführen der Pfeilhöhen $z(u,v)$ der so bestimmten Rezeptfläche zum Beispiel in Abhängigkeit von der y-Koordinate führt jedoch in der Regel zu keinem zufriedenstellenden Ergebnis.

Dieses Problem lässt sich erfindungsgemäß jedoch durch eine Verallgemeinerung des Flächenansatzes Torus mit meridionalen Kreisen auf x- und y-abhängigen Hauptkrümmungen und Hauptkrümmungsrichtungen lösen. Die Erfindung geht dabei von den folgenden Überlegungen aus.

Die Parameter $(c_u, c_v, \alpha)$ eines Torus sind nicht direkt durch die zu erreichende Verordnung gegeben, sondern dies sind die Parameter des Torus an dem Scheitel, an dem der Torus das Brillenglas berührt. Der so definierte Torus gibt nun Anlass zu einer Veränderung der Pfeilhöhe, des Prismas und der Krümmungseigenschaften an einem gewünschten Punkt, beispielsweise den Bezugspunkten $B_F$ und $B_N$. Insbesondere hängen die Gebrauchseigenschaften des Glases in dem gewünschten Punkt auf eindeutige Weise von $(c_u, c_v, \alpha)$ ab. Diejenigen Werte, die zu einer gewünschten Korrektur in $B_F$ führen, sind der erste Parametersatz $(c_{uF}, c_{vF}, \alpha_F)$, und die entsprechenden Werte für die Korrektur in $B_N$ sind der zweite Parametersatz $(c_{uN}, c_{vN}, \alpha_N)$.

Die Werte $(c_u, c_v, \alpha)$ der beiden torischen Flächen zur Korrektur in den Bezugspunkten $B_F$ und $B_N$ werden so ineinander übergeführt, dass eine einfach zu beschreibende glatte Fläche entsteht, die in den beiden Bezugspunkten $B_F$ und $B_N$ die geforderten Sollwirkungen einstellt. Insbesondere werden in einem Verfahrensschritt S30 weitere Parametersätze $(c_u, c_v, \alpha)$ der Rezeptflächengleichung an weiteren Koordinaten $(u, v)$ der Rezeptfläche aus dem ersten Parametersatz $(c_{uF}, c_{vF}, \alpha_F)$ und dem zweiten Parametersatz $(c_{uN}, c_{vN}, \alpha_N)$ interpoliert.

Ein bevorzugtes Interpolationsverfahren zur Durchführung des Verfahrensschrittes S30 wird anhand von Fig. 3 näher erläutert.

In dem Interpolationsverfahren von Fig. 3 wird die so genannte Power-Vektor-Schreibweise verwendet. In einem Schritt S32 werden der erste Parametersatz $(c_{uF}, c_{vF}, \alpha_F)$ und der zweite Parametersatz $(c_{uN}, c_{vN}, \alpha_N)$ gemäß den folgenden Gleichungen in Power-Vektoren transferiert:

$$\vec{P}_{cF} = \begin{pmatrix} M_F \\ J_{0F} \\ J_{45F} \end{pmatrix} = \begin{pmatrix} 0,5(c_{uF} + c_{vF}) \\ -0,5(c_{vF} - c_{uF})\cos(2\alpha_F) \\ -0,5(c_{vF} - c_{uF})\sin(2\alpha_F) \end{pmatrix} \quad \text{und} \quad \vec{P}_{cN} = \begin{pmatrix} M_N \\ J_{0N} \\ J_{45N} \end{pmatrix} = \begin{pmatrix} 0,5(c_{uN} + c_{vN}) \\ -0,5(c_{vN} - c_{uN})\cos(2\alpha_N) \\ -0,5(c_{vN} - c_{uN})\sin(2\alpha_N) \end{pmatrix}$$

In Schritt S34 wird eine Interpolation zwischen diesen beiden Power-Vektoren $\vec{P}_{cF}$ und $\vec{P}_{cN}$ durchgeführt. Vorzugsweise wird diese Interpolation im Parameterraum der Power-Vektoren durchgeführt. Der gewählte Parameterraum der Krümmungs-Powervektoren ist besonders vorteilhaft, weil die Parameter im Wesentlichen direkt die Krümmungseigenschaften des Glases beschreiben. So kann auf einfache Weise der Übergang der Krümmungen vom Fernbezugspunkt $B_F$ zum Nahbezugspunkt $B_N$ auf besonders unmittelbare Art erfolgen. Dies ist insbesondere dann gegeben, wenn die Überführungsfunktion partielle Ableitungen nach x und y besitzt, die in den Bezugspunkten $B_F$, $B_N$ gleich Null sind, und eine Hesse-Matrix aufweist, welche bezüglich x und y an den Bezugspunkten $B_N$ und $B_F$ die Nullmatrix ist, d.h. wenn zusätzlich die zweiten partiellen Ableitungen nach x und y sowie die gemischte Ableitung nach x und y gleich Null sind. In diesem Fall sind die Krümmungseigenschaften der Überlagerungsfläche an den Bezugspunkten vorteilhafterweise direkt an den Koeffizienten der Rezeptflächengleichung ablesbar.

Die Interpolation in Schritt S34 wird in diesem Ausführungsbeispiel unter Verwendung einer Überführungsfunktion $f(x, y)$ mittels der folgenden Power-Vektor-Gleichung durchgeführt:

$$\vec{P}_c(x, y) = f(x, y)\vec{P}_{cF} + (1 - f(x, y))\vec{P}_{cN}$$

Zu jeder gegebenen Überführungsfunktion $f(x, y)$ stehen mit den ersten und zweiten Parametersätzen sechs freie Parameter $(c_{uF}, c_{vF}, \alpha_F, c_{uN}, c_{vN}, \alpha_N)$ in der obigen Power-Vektor-Gleichung zur Verfügung. Wenn eine Vollkorrektion in beiden Bezugspunkten $B_F$ und $B_N$ gefordert wird, stellt dies auch sechs Bedingungen dar, so dass sich die sechs Parameter numerisch eindeutig bestimmen lassen. Alternativ kann man mit diesem Ansatz sogar noch an mehr als zwei Punkten Bedingungen fordern. Allerdings ist das Problem dann mit mehr als sechs Bedingungen an sechs freie Parameter überbestimmt, so dass es sich nicht mehr eindeutig lösen lässt. Verwendet man dabei jedoch kein Nullstellenverfahren, sondern allgemeiner ein Minimierungsverfahren, dann lässt sich - vorzugsweise durch Vergabe von Gewichten an die Bedingungen - numerisch ein Optimum finden, das allen Bedingungen nahe kommt.

Die Überführungsfunktion $f(x, y)$ ist beispielsweise durch die folgende Gleichung gegeben:

$$f(x, y) = 0,5 + \frac{1}{\pi} \arctan(\frac{y - y_0}{y_S}) \ ,$$

wobei $y_S$ ein Skalierungsfaktor ist.

Fig. 5 zeigt den Verlauf dieser Überführungsfunktion entlang der y-Achsenrichtung für x=0, d.h. der Überführungsfunktion

$$f(y, x = 0) = 0,5 + \frac{1}{\pi} \arctan(\frac{y - y_0}{|y_S(x = 0)|})$$

, für verschiedene Skalierungsfaktoren $y_S$. Insbesondere stellt die Kurve f1 die Überführungsfunktion $f(y, x = 0)$ für ys=5mm dar, stellt die Kurve f2 die Überführungsfunktion $f(y,$

$x$ = 0) für $y_s$=15mm dar, und stellt die Kurve f3 die Überführungsfunktion $f(y, x = 0)$ für ys=20mm dar.

Wie anhand der obigen Funktionsgleichung und Fig. 5 erkennbar, handelt es sich bei der Überführungsfunktion $f(x, y)$ insbesondere um eine nicht-lineare Funktion, deren Funktionswerte entlang der y-Achse $f(x=0, y)$ für $-\infty < y < +\infty$ in einem Wertebereich von 0 bis 1 liegen, und um eine doppelasymptotische Funktion. Mit dem Skalierungsfaktor $y_S$ wird der Anstieg der arctan-Funktion gesteuert. Je kleiner $y_S$ ist, umso steiler verläuft die Überführungsfunktion im Zentrum $y_0$ und desto rascher erfolgt der Übergang von den Fern- zu den Nahwerten.

Für den vertikalen Übergang des Power-Vektors $\vec{P}_c$ entlang der y-Achse (x=0mm) führen Werte von

$$y_0 \approx \frac{y_{BF} + y_{BN}}{2}$$

und 4mm $\leq y_s \leq$ 15mm zu guten Ergebnissen.

Ferner haben Beispielrechnungen gezeigt, dass mit einem nur von der y-Koordinate abhängigen Faktor f(y) in der peripheren Übergangszone höhere Flächengradienten auftreten können, die die Abbildungseigenschaften mitunter verschlechtern können. Abhilfe gelingt hier zum Beispiel mit einem von der x-Koordinate abhängigen Skalierungsfaktor $y_s$(x). In einer Ausführungsform der Erfindung ist der von der x-Koordinate abhängige Skalierungsfaktor $y_s$(x) der Überführungsfunktion $f(x, y)$ beispielsweise gegeben durch

$$y_S(x) = y_{SRand} + (y_{SZentrum} - y_{SRand})e^{\frac{-x^2}{b}}$$

mit $b = \dfrac{-(\Delta x)^2}{\ln(0{,}5)}$, wobei $\Delta$x die Halbwertsbreite der Gaußkurve ist (für $\Delta$x = 13mm ergibt sich zum Beispiel b = 243,82).

Nach der auf diese Weise ausgeführten Interpolation der Power-Vektoren in Schritt S34 werden die interpolierten Power-Vektoren $\vec{P}_c$ in einem nächsten Schritt S36 mit Hilfe der folgenden Beziehungen in die Parametersätze ($c_u, c_v, \alpha$) rücktransformiert:

$$\vec{P}_c(x, y) = \begin{pmatrix} M \\ J_0 \\ J_{45} \end{pmatrix}, \quad c_x = M + \sqrt{J_0^2 + J_{45}^2}\ ,$$

$$c_y = c_x - 2\sqrt{J_0^2 + J_{45}^2}\ , \quad \alpha = \frac{1}{2}\arctan(-J_0, -J_{45}) + \frac{\pi}{2}$$

Zurück zu Fig. 2 werden in Schritt S40 die Pfeilhöhen $z(u, v)$ der Rezeptfläche am ersten Bezugspunkt $B_F$ anhand des ersten Parametersatzes ($c_{uF}, c_{vF}, \alpha_F$) und am zweiten Bezugspunkt $B_N$ anhand des zweiten Parametersatzes ($c_{uN}, c_{vN}, \alpha_N$) durch die folgenden Beziehungen bestimmt: Meridionalkrümmung

$$c = c_u \cos^2 \alpha + c_v \sin^2 \alpha = c_u \frac{u^2}{r^2} + c_v \frac{v^2}{r^2}$$ Pfeilhöhe:

$$z(u, v) = \frac{r^2 c}{1 + \sqrt{1 - r^2 c^2}}$$

Außerdem werden in Schritt S40 anhand der interpolierten Parametersätze nach einer Drehung ins u/v-Koordinatensystem gemäß

$$u = x\cos(\alpha) + y\sin(\alpha)\ , \quad v = -x\sin(\alpha) + y\cos(\alpha)\ , \quad r^2 = u^2 + v^2$$

auch die Pfeilhöhen $z(u, v)$ an weiteren Koordinaten $(u, v)$ der Rezeptfläche bestimmt.

Zur weiteren Veranschaulichung des Interpolationsverfahrens der Erfindung zeigt Fig. 4 beispielhaft eine Rezeptfläche $T_R$ (gestrichelte Linie, zum Beispiel in Form einer Überlagerungsfläche), die einen glatten Übergang zwischen dem Torus $T_{cF}$ am ersten Bezugspunkt $B_F$ und dem Torus $T_{cN}$ am zweiten Bezugspunkt $B_N$ darstellt. Die Rezeptfläche $T_R$ schmiegt sich dort, wo die Überlagerungsfunktion $f(x, y)$ klein ist, an den Torus am zweiten Bezugspunkt $T_{cN}$ an und dort, wo die Überlagerungsfunktion $f(x, y)$ groß ist, an den Torus am ersten Bezugspunkt $T_{cF}$ an. Die Pfeilhöhen der Rezeptfläche $T_R$ an weiteren Stellen $(x, y)$ des Koordinatensystems werden über weitere Tori $T_c$ (gepunktete Linie) berechnet, deren Scheitelkrümmungen wie oben beschrieben im Power-Vektorraum interpoliert werden.

Die vorteilhaften Wirkungen des oben beschriebenen Verfahrens zum Erstellen des Designs der Rezeptfläche bzw. der auf diese Weise hergestellten Multifokallinse werden nachfolgend Bezug nehmend auf Fig. 6 bis 16 erläutert. Dabei sind in Teilfigur A jeweils ein astigmatischer Fehler (durchgezogene Linie) und ein Refraktionsfehler (gestrichelte Linie) entlang der Hauptblickrichtung dargestellt, ist in Teilfigur B jeweils ein astigmatischer Fehler in der Gebrauchsstellung dargestellt, und ist in Teilfigur C jeweils ein Flächenastigmatismus der Rückfläche dargestellt.

Die in Fig. 6 bis 8 gezeigten Ausführungsformen 1 bis 3 betreffen jeweils eine Multifokallinse mit einer sphärischen Vorderfläche und einer Rückfläche in moderner Freiformtechnologie, insbesondere ein Progressiv Life Free® - Gleitsichtbrillenglas der Anmelderin.

Die herkömmliche Multifokallinse gemäß Ausführungsform 1 stellt einen vorgefertigten Blank vom Typ Progressiv life free 1,6 mit der Verordnung Sph 3,0 dpt und Addition 1,5 dpt dar. Die sphärische Vorderfläche besitzt die Basiskurve BK 6,0 dpt und weist eine Flächenbrechkraft von $D_1 = 6,82$ dpt an der Vorderfläche auf. Die Multifokallinse hat ferner eine Brechzahl n = 1,597 und eine Mittendicke $d_M = 3,8$ mm. Die progressive Rückfläche ist in der Gebrauchsstellung mit den Standardparametern Hornhautscheitelabstand HSA = 15 mm, Vorneigung VN = 8° und Fassungsscheibenwinkel FSW = 0° optimiert. Wie aus Fig. 6A-C ersichtlich, zeigt diese herkömmliche Multifokallinse gute und ausgewogene Abbildungseigenschaften.

Die herkömmliche Multifokallinse von Ausführungsform 2 basiert auf dem Blank der Ausführungsform 1, hat die gleiche Verordnung wie Ausführungsform 1, aber andere Gebrauchsstellungsparameter (HSA = 12 mm, VN = 2°, FSW = 4°). Zur Einstellung einer Vollkorrektion im Fernbezugspunkt $B_F$ wird auf der progressiven Rückfläche des Blanks ein Überlagerungstorus ausgebildet, um die Rezeptfläche zu bilden.

Aus den Darstellungen von Fig. 7 ist erkennbar, dass sich dann, wenn das Gleitsichtbrillenglas in einer Fassung verwendet wird, die zu leicht abgeänderten Parameter der Gebrauchsstellung führen, die Abbildungseigenschaften vor allem im Nahbereich deutlich verschlechtern können, selbst wenn die geänderten Gebrauchsstellungs-Parameter durch einen Überlagerungstorus auf die progressive Rückfläche für $B_F$ berücksichtigt werden. Schon auf einer Höhe von $y_{BN} = $ -14 mm steigt der astigmatische Fehler im Nahbereich auf nicht mehr tolerierbare Werte von 0,5 dpt an (vgl. Fig. 7B), und auch die Addition nimmt um 0,25 dpt zu (positiver Refraktionsfehler von ca. 0,25 dpt im Nahbereich, vgl. Fig. 7A).

Die erfindungsgemäße Multifokallinse von Ausführungsform 3 basiert ebenfalls auf dem Blank gemäß Ausführungsform 1. Sie hat die gleiche Verordnung wie Ausführungsform 1 und die gleichen Gebrauchsstellungs-Parameter wie Ausführungsform 2. Im Gegensatz zu Ausführungsform 2 wird bei der Ausführungsform 3 der Erfindung aber ein interpolierender Überlagerungstorus auf der progressiven Rückfläche ausgebildet, um nicht nur im Fernbezugspunkt $B_F$, sondern auch im Nahbezugspunkt $B_N$ die Vollkorrektion mit den neuen Gebrauchsstellungs-Parametern einzustellen.

Wie in Fig. 8 erkennbar, kann mit der erfindungsgemäß designten Rezeptfläche im Nahbezugspunkt $B_N$ ebenfalls Vollkorrektion eingestellt werden, ohne dass sich im Fernbereich eine Verschlechterung ergibt. Die Rückfläche zeigt im Nahbereich jetzt einen Flächenastigmatismus größer 0,5 dpt (vgl. Fig. 8C), der zur Fehlerkorrektur durch den neuen Flächentyp eingeführt wird.

Die in Fig. 9 bis 13 gezeigten Ausführungsformen 4 bis 8 betreffen ebenfalls jeweils eine Multifokallinse mit einer sphärischen Vorderfläche und einer Rückfläche in moderner Freiformtechnologie, insbesondere ein Progressiv Life Free® - Gleitsichtbrillenglas der Anmelderin.

Die herkömmliche Multifokallinse gemäß Ausführungsform 4 stellt einen vorgefertigten Blank vom Typ Progressiv life free 1,6 mit der Verordnung Sph 0,5 dpt und Addition 1,0 dpt dar. Die sphärische Vorderfläche besitzt eine BK 5,0 und weist $D_1 = 5,686$ dpt auf. Die Linse hat ferner eine Brechzahl n = 1,597 und eine Mittendicke $d_M = 2,0$ mm. Die progressive Rückfläche ist in der Gebrauchsstellung mit den Standardparametern HSA = 15 mm, VN = 8° und FSW = 0° optimiert. Wie aus Fig. 9 ersichtlich, zeigt auch dieser herkömmliche Blank aufgrund der dafür optimierten progressiven Rückfläche gute und ausgewogene Abbildungseigenschaften.

Die herkömmliche Multifokallinse von Ausführungsform 5 basiert auf dem Blank der Ausführungsform 4, hat die gleiche Verordnung wie Ausführungsform 4, aber andere Gebrauchsstellungsparameter (HSA = 12 mm, VN = 0°, FSW = 10°). Zur Einstellung der Vollkorrektion im Fernbezugspunkt $B_F$ wird auf der progressiven Rückfläche des Blanks ein Überlagerungstorus ausgebildet.

Wie aus Fig. 10 ersichtlich, kann der Überlagerungstorus jedoch nur die ohnehin kleinen Abweichungen im Fernbezugspunkt $B_F$ korrigieren. Die progressiv-torische Rückfläche unterscheidet sich wenig von der Basisrückfläche der Ausführungsform 4. Im Nahbereich stellen sich ein astigmatischer Fehler von etwa 0,25 dpt (vgl. Fig. 10B) und ein ungefähr halb so großer Refraktionsfehler (vgl. Fig. 10A) ein.

Die erfindungsgemäße Multifokallinse von Ausführungsform 6 basiert ebenfalls auf dem Blank gemäß Ausführungsform 4. Sie hat die gleiche Verordnung wie Ausführungsform 4 und die gleichen Gebrauchsstellungs-Parameter wie Ausführungsform 5. Im Gegensatz zu Ausführungsform 5 wird bei der Ausführungsform 6 der Erfindung aber ein interpolierender Überlagerungstorus auf der progressiven Rückfläche ausgebildet, um nicht nur im Fernbezugspunkt $B_F$, sondern auch im Nahbezugspunkt $B_N$ die Vollkorrektion mit den neuen Gebrauchsstellungs-Parametern einzustellen.

Wie in Fig. 11 erkennbar, kann mit der erfindungsgemäßen Rezeptfläche im Nahbezugspunkt $B_N$ ebenfalls Vollkorrektion eingestellt werden, ohne dass sich im Fernbereich eine Verschlechterung ergibt. Die Rückfläche zeigt im Nahbereich jetzt einen Flächenastigmatismus von etwa 0,25 dpt (vgl. Fig. 11C), der zur Fehlerkorrektur durch den neuen Flächentyp eingeführt wird.

Die herkömmliche Multifokallinse von Ausführungsform 7 basiert wiederum auf dem Blank der Ausführungsform 4. Sie hat die gleiche Fernverordnung und die gleichen Gebrauchsstellungs-Parameter wie Ausführungsform 4, aber einen Nahastigmatismus von 0,5 dpt A 0°.

Wie aus Fig. 12 ersichtlich, kann die konventionelle progressive Rückfläche den Nahastigmatismus nicht korrigieren. Der Nahastigmatismus des Auges zeigt sich 1:1 als astigmatischer Fehler im Nahbereich des Glases (vgl. Fig. 12B). Nach dem Stand der Technik müsste jetzt eine individuelle online-Optimierung der Rückfläche erfolgen.

Die erfindungsgemäße Multifokallinse von Ausführungsform 8 auch wieder auf dem Blank gemäß Ausführungsform 4. Sie hat die gleiche Verordnung und die gleichen Gebrauchsstellungs-Parameter wie Ausführungsform 5. Im Gegensatz zur herkömmlichen Ausführungsform 7 wird bei der Ausführungsform 8 der Erfindung ein interpolierender Überlagerungstorus auf der progressiven Rückfläche ausgebildet, um sowohl im Fernbezugspunkt $B_F$ als auch im Nahbezugspunkt $B_N$ die Vollkorrektion bei einem individuellen Nahastigmatismus von 0,5 dpt einzustellen.

Wie in Fig. 13 erkennbar, kann mit der erfindungsgemäßen Rezeptfläche zusätzlich zur Einstellung der Vollkorrektion im Nahbezugspunkt $B_N$ auch eine Vollkorrektion des individuellen Nahastigmatismus eingestellt werden, ohne dass hierzu eine Online-Optimierung erforderlich ist. Die progressiv-torische Rückfläche der Erfindung zeigt im Nahbereich einen Flächenastigmatismus von knapp 0,50 dpt (vgl. Fig. 13C), der zur Korrektur des Nahastigmatismus eingeführt worden ist.

Die in Fig. 14 bis 16 gezeigten Ausführungsformen 9 bis 11 betreffen jeweils eine Multifokallinse mit einer progressiven Vorderfläche und einer torischen Rezeptfläche.

Die herkömmliche Multifokallinse gemäß Ausführungsform 9 stellt einen vorgefertigten Blank mit der Verordnung Sph 0,5 dpt und Addition 1,0 dpt dar. Die Vorderfläche hat eine progressive Basiskurve BK 4,0. Die als Rezeptfläche dienende sphärische Rückfläche ist in der Gebrauchsstellung mit den Standardparametern HSA = 13 mm, VN = 7° und FSW = 0° optimiert. Wie aus Fig. 14 ersichtlich, zeigt dieser herkömmliche Blank gute Abbildungseigenschaften für die Mitte des Basiskurvenbereichs und bei Verwendung in der Standardgebrauchssituation. Die sphärische Rückfläche hat keinen Flächenastigmatismus, weshalb keine entsprechende Fig. 14C vorgesehen ist.

Die herkömmliche Multifokallinse von Ausführungsform 10 basiert auf dem Blank der Ausführungsform 9 und hat eine andere Verordnung (Sph -1.00 dpt, Zyl 3.00 dpt, Achse 0°, Addition 1.00 dpt) und andere Gebrauchsstellungsparameter (HSA = 13 mm, VN = 0°, FSW = 10°).

Wie aus Fig. 15 ersichtlich, kann die herkömmliche torische Brillenglasrückfläche mit konstantem Flächenastigmatismus nur im Fernbezugspunkt $B_F$ die Verordnung erfüllen. Im Nahbereich treten durch die Kombination von astigmatischer Verordnung, Einstellastigmatismus und Astigmatismus schiefer Bündel auf Grund der geänderten Gebrauchsstellungsparameter sehr große Fehler auf (vgl. Fig. 15A).

Das Konzept der vorliegenden Erfindung kann aber nicht nur auf eine Überlagerungsfläche auf eine gegebene progressive Basisfläche, sondern auch auf eine torische Rezeptfläche angewendet werden. Dabei kann sowohl im Fernbezugspunkt $B_F$ als auch im Nahbezugspunkt $B_N$ immer die Vollkorrektion erreicht werden.

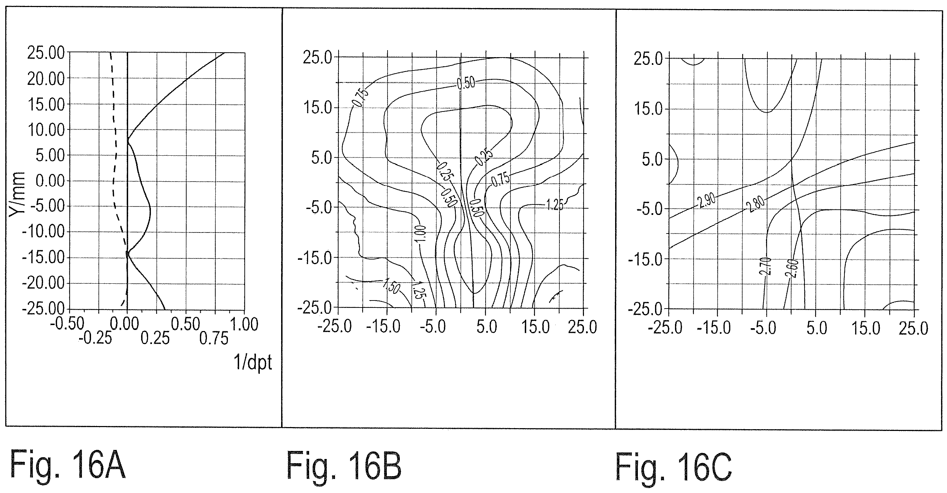

Die erfindungsgemäße Multifokallinse von Ausführungsform 11 basiert auf dem Blank der Ausführungsform 9. Sie hat die gleiche Verordnung und die gleichen Gebrauchsstellungs-Parameter wie die herkömmliche Ausführungsform 10, aber eine erfindungsmäßig designte Rückfläche. Wie aus Fig. 16 erkennbar, kann die erfindungsgemäß designte Rückfläche sogar bei astigmatischen Verordnungen und Einstellastigmatismus ohne Online-Optimierung die Rezeptwerte auch im Nahbezugspunkt $B_N$ vollständig umsetzen.

BEZUGSZIFFERNLISTE

10    Multifokallinse
12    Auge
16    Rückfläche

17 Basisebene der Rückfläche
18 Vorderfläche
19 Basisebene der Vorderfläche
20 Horizontale
21 Nahblickrichtung

$B_F$ erster Bezugspunkt, Fernbezugspunkt
$B_N$ zweiter Bezugspunkt, Nahbezugspunkt
O geometrischer Mittelpunkt
S Scheitelpunkt
VN Vorneigung
(x,y) Flächenkoordinate im x/y-Koordinatensystem
(u,v) Flächenkoordinate im u/v-Koordinatensystem
$(c_u, c_v, \alpha)$ Parametersatz der Rezeptflächengleichung
$P_c$ Power-Vektor für den Parametersatz $(c_u, c_v, \alpha)$
$T_R$ Rezeptfläche für den Parametersatz $(c_u, c_v, \alpha)$
f(x,y) Überführungsfunktion
$y_S$ Skalierungsfaktor
z(u,v) Pfeilhöhe der Rezeptfläche im u/v-Koordinatensystem
Index F bezogen auf den ersten Bezugspunkt
Index N bezogen auf den zweiten Bezugspunkt

## Patentansprüche

1. Computer-implementiertes Verfahren zum Erstellen eines Designs einer Rezeptfläche einer Multifokallinse (10), insbesondere für ein Gleitsichtbrillenglas, zum Zweck der Verwendung des Designs für die Herstellung einer Multifokallinse, aufweisend die

   Schritte:
   Schritt S10: Erhalten von ersten Daten ($m_F$)zur Beschreibung wenigstens einer Aberration eines Auges (12) eines Probanden für eine erste Gebrauchssituation und von zweiten Daten ($m_N$) zur Beschreibung wenigstens einer Aberration des Auges (12) des Probanden für eine zweite Gebrauchssituation (Schritt S10);

   Schritt S20: Ermitteln eines ersten Parametersatzes (($c_{uF}$, $c_{vF}$, $a_F$)) und eines zweiten Parametersatzes (($c_{uN}$, $c_{vN}$, $a_N$)) einer vorgegebenen Rezeptflächengleichung aus den ersten und zweiten Daten ($m_F$, $m_N$), wobei die Rezeptflächengleichung mit dem ersten Parametersatz einem ersten Bezugspunkt ($B_F$) der Rezeptfläche für die erste Gebrauchssituation zugeordnet ist und mit dem zweiten Parametersatz einem zweiten Bezugspunkt ($B_N$) der Rezeptfläche für die zweite Gebrauchssituation zugeordnet ist; und
   Schritt S40: Bestimmen von Rezeptflächenwerten (z(u, v)) der Rezeptfläche am ersten Bezugspunkt ($B_F$) anhand des ersten Parametersatzes (($c_{uF}$,$c_{vF}$,$a_F$)) und am zweiten Bezugspunkt ($B_N$) anhand des zweiten Parametersatzes (($c_{uN}$, $c_{vN}$, $a_N$)),
   **dadurch gekennzeichnet, dass**
   das Verfahren ferner einen Schritt S30 des Berechnens, mittels Interpolation oder Extrapolation, von weiteren Parametersätzen (($c_u$,$c_v$,a)) der Rezeptflächengleichung an weiteren Koordinaten ((u, v)) der Rezeptfläche aus dem ersten Parametersatz (($c_{uF}$, $c_{vF}$, $a_F$)) und dem zweiten Parametersatz (($c_{uN}$, $c_{vN}$, $a_N$)) aufweist; und
   in Schritt S40 zudem Rezeptflächenwerte (z(u, v)) der Rezeptfläche an weiteren Koordinaten ((u, v)) der Rezeptfläche anhand der weiteren Parametersätze (($c_u$, $c_v$, a)) bestimmt werden.

2. Computer-implementiertes Verfahren nach Anspruch 1, bei welchem die Rezeptflächenwerte (z(u, v)) in einem u/v-Koordinatensystem in Schritt S40 durch Pfeilhöhen der Rezeptfläche nach der folgenden Gleichung bestimmt werden:

$$z(u,v) = \frac{r^2 c}{1 + \sqrt{1 - r^2 c^2}}$$

$$c = c_u cos^2\alpha + c_v sin^2\alpha = c_u \frac{u^2}{r^2} + c_v \frac{v^2}{r^2} \text{ und } r^2 = u^2 + v^2.$$

**3.** Computer-implementiertes Verfahren nach Anspruch 1 oder 2, bei welchem die Rezeptflächengleichung eine Torusgleichung ist.

**4.** Computer-implementiertes Verfahren nach einem der Ansprüche 1 bis 3, bei welchem das Berechnender weiteren Parametersätze $((c_u, c_v, a))$ der Rezeptflächengleichung in Schritt S30 in einem Parameterraum von Power-Vektoren durchgeführt wird.

**5.** Computer-implementiertes Verfahren nach einem der Ansprüche 1 bis 4, bei welchem das Berechnen der weiteren Parametersätze $((c_u, c_v, a))$ der Rezeptflächengleichung in Schritt S30 in einer Power-Vektor-Schreibweise der Parameter durchgeführt wird.

**6.** Computer-implementiertes Verfahren nach Anspruch 5, bei welchem das Berechnen der weiteren Parametersätze $((c_u, c_v, a))$ der Rezeptflächengleichung in Schritt S30 mittels der folgenden Power-Vektor-Gleichung durchgeführt wird:

$$\vec{P}_c(x, y) = f(x, y)\vec{P}_{cF} + (1 - f(x, y))\vec{P}_{cN}$$

mit $P_c(x, y)$:

$$\text{Power-Vektor} \quad \vec{P}_c = \begin{pmatrix} M \\ J_0 \\ J_{45} \end{pmatrix} = \begin{pmatrix} 0{,}5(c_u + c_v) \\ -0{,}5(c_v - c_u)\cos(2\alpha) \\ -0{,}5(c_v - c_u)\sin(2\alpha) \end{pmatrix}$$

$P_{cF}$: aus dem ersten Parametersatz $((c_{uF}, c_{vF}, a_F))$ berechneter Power-Vektor;
$P_{cN}$: aus dem zweiten Parametersatz $((c_{uN}, c_{vN}, a_N))$ berechneter Power-Vektor
$f(x, y)$: Überführungsfunktion.

**7.** Computer-implementiertes Verfahren nach Anspruch 6, bei welchem die Überführungsfunktion $(f(x, y))$ eine nichtlineare Funktion ist, deren Funktionswerte entlang der y-Achse $((f(x = 0, y))$ in einem Wertebereich von 0 bis 1 liegen.

**8.** Computer-implementiertes Verfahren nach Anspruch 6 oder 7, bei welchem die Überführungsfunktion $(f(x, y))$ eine doppelasymptotische Funktion ist.

**9.** Computer-implementiertes Verfahren nach einem der Ansprüche 6 bis 8, bei welchem die Überführungsfunktion $(f(x, y))$ partielle Ableitungen nach x und y besitzt, die in dem ersten und in dem zweiten Bezugspunkt (B$_F$, B$_N$) gleich Null sind, wobei die Überführungsfunktion $(f(x, y))$ vorzugsweise eine Hesse-Matrix aufweist, welche bezüglich x und y an dem ersten und an dem zweiten Bezugspunkt (B$_F$, B$_N$) die Nullmatrix ist.

**10.** Computer-implementiertes Verfahren nach einem der Ansprüche 6 bis 8, bei welchem die Überführungsfunktion $(f(x, y))$ gegeben ist durch

$$f(x, y) = 0{,}5 + \frac{1}{\pi}\arctan\left(\frac{y - y_0}{y_S}\right),$$

wobei $y_s$ ein Skalierungsfaktor ist.

**11.** Computer-implementiertes Verfahren nach Anspruch 10, bei welchem der Skalierungsfaktor $(y_s)$ der Überführungsfunktion $(f(x, y))$ in einem Wertebereich von 4 mm bis 15 mm liegt.

**12.** Computer-implementiertes Verfahren nach Anspruch 10 oder 11, bei welchem der Skalierungsfaktor $(y_s)$ der Über-

führungsfunktion (**f(x, y)**) ein von der x-Koordinate abhängiger Skalierungsfaktor (**$y_s(x)$**) ist.

13. Computer-implementiertes Verfahren nach Anspruch 12, bei welchem der von der x-Koordinate abhängige Skalierungsfaktor (**$y_s(x)$**) der Überführungsfunktion (**f(x, y)**) gegeben ist durch

$$y_s(x) = y_{sRand} + (y_{sZentrum} - y_{sRand})e^{\frac{-x^2}{b}}$$

mit $b = \dfrac{-(\Delta x)^2}{\ln(0{,}5)}$ , wobei $\Delta x$ die Halbwertsbreite der Gaußkurve ist.

14. Verfahren zur Herstellung einer Multifokallinse (10) mit einer Vorderfläche (18) und einer Rückfläche (16), insbesondere für ein Gleitsichtbrillenglas, bei welchem ein Design einer Rezeptfläche nach einem computerimplementierten Verfahren nach einem der Ansprüche 1 bis 13 erstellt wird.

15. Vorrichtung zur Herstellung einer Multifokallinse (10) mit einer Vorderfläche (18) und einer Rückfläche (16), insbesondere für ein Gleitsichtbrillenglas, aufweisend ein Mittel zum Erstellen eines Designs einer Rezeptfläche der Multifokallinse, welches ausgestaltet ist zum Erstellen des Designs der Rezeptfläche nach einem der Ansprüche 1 bis 13.

16. Computerprogrammerzeugnis, welches ausgestaltet ist, wenn geladen und ausgeführt auf einem Computer, ein computer-implementiertes Verfahren zum Erstellen eines Designs einer Rezeptfläche einer Multifokallinse nach einem der Ansprüche 1 bis 13 auszuführen.

17. Speichermedium mit einem darauf gespeicherten Computerprogramm, wobei das Computerprogramm ausgestaltet ist, wenn geladen und ausgeführt auf einem Computer, ein computer-implementiertes Verfahren zum Erstellen eines Designs einer Rezeptfläche einer Multifokallinse nach einem der Ansprüche 1 bis 13 auszuführen.

**Claims**

1. A computer-implemented method for creating a design of a prescription surface of a multifocal lens (10), in particular for a progressive lens, for the purpose of using the design for the manufacture of a multifocal lens, comprising the steps of:

   step S10: obtaining first data ($m_F$) for describing at least one aberration of an eye (12) of a subject for a first situation of use and second data ($m_N$) for describing at least one aberration of the eye (12) of the subject for a second situation of use (step S10);
   step S20: determining a first parameter set (($c_{uF}$, $c_{vF}$, $a_F$)) and a second parameter set (($c_{uN}$, $c_{vN}$, $a_N$)) of a predetermined recipe surface equation from the first and second data ($m_F$, $m_N$) the recipe surface equation being associated with the first parameter set with a first reference point ($B_F$) of the recipe surface and being associated with the second parameter set with a second reference point ($B_N$) of the recipe surface; and
   step S40: determination of recipe area values ($z(u, v)$) of the recipe area at the first reference point ($B_F$) using the first parameter set (($c_{uF}$, $c_{vF}$, $a_F$)) at the second reference point ($B_N$) using the second parameter set (($c_{uN}$, $c_{vN}$, $a_N$)),
   **characterised in that**
   the method further comprises a step S30 of calculating, by means of interpolation or
   extrapolation, further parameter sets (($c_u$, $c_v$, $a$)) of the recipe surface equation at further coordinates (($u$, $v$)) of the recipe surface from the first parameter set (($c_{uF}$, $c_{vF}$, $a_F$) and the second parameter set (($c_{uN}$, $c_{vN}$, $a_N$)); and
   in step S40, recipe surface values ($z(u, v)$) of the recipe surface are also determined at further coordinates (($u$, $v$)) of the recipe surface using the further parameter sets (($c_u$, $c_v$, $a$)).

2. Computer-implemented method according to claim 1, wherein the prescription area values ($z(u, v)$) in a u/v coordinate system are determined in step S40 by arrow heights of the prescription area according to the following equation:

$$z(u, v) = \frac{r^2 c}{1 + \sqrt{1 - r^2 c^2}}$$

$$c = c_u \cos^2\alpha + c_v \sin^2\alpha = c_u \frac{u^2}{r^2} + c_v \frac{v^2}{r^2} \text{ und } r^2 = u^2 + v^2 .$$

3. Computer-implemented method according to claim 1 or 2, wherein the prescription surface equation is a torus equation.

4. Computer-implemented method according to any one of claims 1 to 3, wherein calculating the further parameter sets $((c_u, c_v, a))$ of the prescription surface equation in step S30 is performed in a parameter space of power vectors.

5. Computer-implemented method according to any one of claims 1 to 4, wherein the calculation of the further parameter sets $((c_u, c_v, a))$ of the prescription surface equation in step S30 is performed in a power vector notation of the parameters.

6. Computer-implemented method according to claim 5, in which the interpolation of the further parameter sets $((c_u, c_v, a))$ of the prescription surface equation in step S30 is carried out by means of the following power vector equation:

$$\vec{P}_c(x, y) = f(x, y)\vec{P}_{cF} + (1 - f(x, y))\vec{P}_{cN}$$

with $P_c(x, y)$:

$$\text{power vector } \vec{P}_c = \begin{pmatrix} M \\ J_0 \\ J_{45} \end{pmatrix} = \begin{pmatrix} 0{,}5(c_u + c_v) \\ -0{,}5(c_v - c_u)\cos(2\alpha) \\ -0{,}5(c_v - c_u)\sin(2\alpha) \end{pmatrix}$$

$P_{cF}$: power vector calculated from the first parameter set$((c_{uF}, c_{vF}, a_F)$;
$P_{cN}$: power vector calculated from the second parameter set$((c_{uN}, c_{vN}, a_N))$;
$f(x, y)$: transfer function.

7. Computer-implemented method according to claim 6, in which the transfer function $(f(x, y))$ is a non-linear function whose function values along the y-axis $((f(x = 0, y))$ lie in a value range from 0 to 1.

8. Computer-implemented method according to claim 6 or 7, in which the transfer function $(f(x, y))$ is a double-asymptotic function.

9. Computer-implemented method according to one of claims 6 to 8, wherein the transfer function $(f(x, y))$ has partial derivatives with respect to x and y which are equal to zero at the first and second reference points $(B_F, B_N)$, wherein the transfer function $(f(x,y))$ preferably has a Hessian matrix which is the zero matrix with respect to x and y at the first and second reference points $(B_F, B_N)$.

10. Computer-implemented method according to any one of claims 6 to 8, wherein the transfer function $(f(x, y))$ is given by

$$\left(f(x, y)\right) = 0{,}5 + \frac{1}{\pi}\arctan\left(\frac{y - y_0}{y_S}\right),$$

where $y_s$ is a scaling factor.

11. Computer-implemented method according to claim 10, in which the scaling factor $y_S$ of the transfer function $(f(x,y))$ lies in a value range from 4 mm to 15 mm.

12. Computer-implemented method according to claim 10 or 11, in which the scaling factor $y_S$ of the transfer function $(f(x, y))$ is a scaling factor $((y_S(x))$ dependent on the x-coordinate.

**13.** Computer-implemented method according to claim 12, in which the scaling factor $y_S$ of the transfer function ($f(x,y)$) which is dependent on the x-coordinate is given by

$$y_S(x) = y_{sEdge} + (y_{SCentre} - y_{sEdge})e^{\frac{-x^2}{b}}$$

with $b = \frac{-(\Delta x)^2}{\ln(0,5)}$ , where $\Delta x$ is the half-width of the Gaussian curve.

**14.** Method for producing a multifocal lens (10) with a front surface (18) and a rear surface (16), in particular for a progressive lens, in which a design of a prescription surface is created according to a method according to one of claims 1 to 13.

**15.** Apparatus for producing a multifocal lens (10) having a front surface (18) and a back surface (16), in particular for a progressive lens, comprising a means for creating a design of a prescription surface of the multifocal lens, which is configured to create the design of the prescription surface according to any one of claims 1 to 13.

**16.** Computer program product adapted, when loaded and executed on a computer, to perform a computer-implemented method for creating a design of a prescription surface of a multifocal lens according to any one of claims 1 to 13.

**17.** Storage medium having a computer program stored thereon, wherein the computer program is configured, when loaded and executed on a computer, to perform a computer-implemented method for creating a design of a prescription surface of a multifocal lens according to any one of claims 1 to 13.

**Revendications**

**1.** Procédé mis en oeuvre par ordinateur pour créer un design d'une surface de prescription d'une lentille multifocale (10), en particulier pour un verre de lunettes progressif, dans le but d'utiliser le design pour la fabrication d'une lentille multifocale, comprenant les étapes suivantes :

étape S10 : obtenir des premières données ($m_F$) pour décrire au moins une aberration de l'oeil (12) d'un sujet pour une première situation d'utilisation et des deuxièmes données ($m_N$) pour décrire au moins une aberration de l'oeil (12) du sujet pour une deuxième situation d'utilisation (étape S10) ;
étape S20: détermination d'un premier jeu de paramètres (($c_{uF}$, $c_{vF}$, $a_F$)) et d'un deuxième jeu de paramètres (($c_{uN}$, $c_{vN}$, $a_N$)) d'une équation de surface de réception prédéterminée à partir des premières et deuxièmes données ($m_F$, $m_N$), l'équation de surface de réception étant associée avec le premier jeu de paramètres à un premier point de référence ($B_F$) de la surface de réception et étant associée avec le deuxième jeu de paramètres à un deuxième point de référence ($B_N$) de la surface de réception ; et
étape S40 : détermination de valeurs de surface de recette ($z(u, v)$) de la surface de recette au premier point de référence ($B_F$) à l'aide du premier jeu de paramètres (($c_{uF}$, $c_{vF}$, $a_F$)), au deuxième point de référence ($B_N$) à l'aide du deuxième jeu de paramètres (($c_{uN}$, $c_{vN}$, $a_N$)),
**caractérisé en ce que**
le procédé comprend en outre une étape S30 de calcul, par interpolation ou extrapolation, d'autres ensembles de paramètres (($c_u$, $c_v$, $a$)) de l'équation de surface de recette à d'autres coordonnées (($u$, $v$)) de la surface de recette à partir du premier ensemble de paramètres (($c_{uF}$, $c_{vF}$, $a_F$)) et du deuxième ensemble de paramètres (($c_{uN}$, $c_{vN}$, $a_N$)); et
à l'étape S40, on détermine en outre des valeurs de surface de recette ($z(u, v)$) de la surface de recette à d'autres coordonnées ((u, v)) de la surface de recette à l'aide des autres jeux de paramètres (($c_u$, $c_v$, $a$)).

**2.** Procédé mis en oeuvre par ordinateur selon la revendication 1, dans lequel les valeurs de surface de recette ($z(u, v)$) dans un système de coordonnées u/v sont déterminées à l'étape S40 par des hauteurs de flèche de la surface de recette selon l'équation suivante :

$$z(u,v) = \frac{r^2 c}{1 + \sqrt{1 - r^2 c^2}}$$

$$c = c_u \cos^2\alpha + c_v \sin^2\alpha = c_u \frac{u^2}{r^2} + c_v \frac{v^2}{r^2} \text{ und } r^2 = u^2 + v^2 \ .$$

3. Procédé mis en oeuvre par ordinateur selon la revendication 1 ou 2, dans lequel l'équation de la surface de recette est une équation torique.

4. Procédé mis en oeuvre par ordinateur selon l'une quelconque des revendications 1 à 3, dans lequel le calcul des autres jeux de paramètres $((c_u, c_v, a))$ de l'équation de surface de recette est effectué à l'étape S30 dans un espace de paramètres de vecteurs de puissance.

5. Procédé mis en oeuvre par ordinateur selon l'une quelconque des revendications 1 à 4, dans lequel le calcul des autres jeux de paramètres $((c_u, c_v, a))$ de l'équation de surface de recette à l'étape S30 est effectué dans un espace d'écriture vectorielle de puissance des paramètres.

6. Procédé mis en oeuvre par ordinateur selon la revendication 5, dans lequel l'interpolation des autres ensembles de paramètres $((c_u, c_v, a))$ de l'équation de la surface de réception à l'étape S30 est effectuée au moyen de l'équation vectorielle de puissance suivante :

$$\vec{P}_c(x,y) = f(x,y)\vec{P}_{cF} + (1 - f(x,y))\vec{P}_{cN}$$

avec $P_c(x, y)$:

$$\text{vecteur de puissance } \vec{P}_c = \begin{pmatrix} M \\ J_0 \\ J_{45} \end{pmatrix} = \begin{pmatrix} 0{,}5(c_u + c_v) \\ -0{,}5(c_v - c_u)\cos(2\alpha) \\ -0{,}5(c_v - c_u)\sin(2\alpha) \end{pmatrix}$$

$P_{cF}$: vecteur de puissance calculé à partir du premier jeu de paramètres $((c_{uF}, c_{vF}, a_F)$;
$P_{cN}$: vecteur de puissance calculé à partir du deuxième jeu de paramètres $((c_{uN}, c_{vN}, a_N))$; $f(x, y)$: fonction de transfert.

7. Procédé mis en oeuvre par ordinateur selon la revendication 6, dans lequel la fonction de transfert $(f(x,y))$ est une fonction non linéaire dont les valeurs de fonction le long de l'axe y $((f(x = 0, y))$ sont comprises dans une plage de valeurs de 0 à 1.

8. Procédé mis en oeuvre par ordinateur selon la revendication 6 ou 7, dans lequel la fonction de transfert $(f(x, y))$ est une fonction asymptotique double.

9. Procédé mis en oeuvre par ordinateur selon l'une quelconque des revendications 6 à 8, dans lequel la fonction de transfert $(f(x, y))$ possède des dérivées partielles en x et y qui sont égales à zéro aux premier et deuxième point de référence $(B_F, B_N)$, la fonction de transfert $(f(x,y))$ comprenant de préférence une matrice de Hesse qui est la matrice zéro par rapport à x et y aux premier et deuxième points de référence $(B_F, B_N)$.

10. Procédé mis en oeuvre par ordinateur selon l'une quelconque des revendications 6 à 8, dans lequel la fonction de transfert $(f(x,y))$ est donnée par

$$\left(f(x,y)\right) = 0{,}5 + \frac{1}{\pi}\arctan\left(\frac{y - y_0}{y_S}\right),$$

où $y_S$ est un facteur d'échelle.

11. Procédé mis en oeuvre par ordinateur selon la revendication 10, dans lequel le facteur d'échelle $y_S$ de la fonction de transfert ($f(x,y)$) est compris dans une plage de valeurs allant de 4 mm à 15 mm.

**12.** Procédé mis en oeuvre par ordinateur selon la revendication 10 ou 11, dans lequel le facteur d'échelle $y_S$ de la fonction de transfert ($f(x,y)$) est un facteur d'échelle (($y_S(x)$) dépendant de la coordonnée x.

**13.** Procédé mis en oeuvre par ordinateur selon la revendication 12, dans lequel le facteur d'échelle (($y_S(x)$) de la fonction de transfert ($f(x,y)$) dépendant de la coordonnée x est donné par

$$y_S(x) = y_{sBord} + (y_{SCentre} - y_{sBord)}e^{\frac{-x^2}{b}}$$

avec $b = \frac{-(\Delta x)^2}{\ln(0,5)}$ , où $\Delta x$ est la largeur à mi-hauteur de la courbe de Gauss.

**14.** Procédé de fabrication d'une lentille multifocale (10) comportant une face avant (18) et une face arrière (16), notamment pour un verre progressif, dans lequel on réalise un design d'une surface de prescription selon un procédé selon l'une des revendications 1 à 13.

**15.** Dispositif pour la fabrication d'une lentille multifocale (10) avec une surface avant (18) et une surface arrière (16), en particulier pour un verre de lunettes progressif, présentant un moyen pour créer un design d'une surface de prescription de la lentille multifocale, qui est conçu pour créer le design de la surface de prescription selon l'une des revendications 1 à 13.

**16.** Produit de programme informatique qui, lorsqu'il est chargé et exécuté sur un ordinateur, est configuré pour exécuter un procédé mis en oeuvre par ordinateur pour créer un design d'une surface de prescription d'une lentille multifocale selon l'une quelconque des revendications 1 à 13.

**17.** Support de stockage sur lequel est stocké un programme informatique, le programme informatique étant configuré, lorsqu'il est chargé et exécuté sur un ordinateur, pour exécuter un procédé mis en oeuvre par ordinateur pour créer un design d'une surface de prescription d'une lentille multifocale selon l'une quelconque des revendications 1 à 13.

**Fig. 1**

**Fig. 2**

Fig. 3

Fig. 4

Fig. 5

Fig. 6A          Fig. 6B          Fig. 6C

EP 3 278 173 B1

Fig. 7A    Fig. 7B    Fig. 7C

Fig. 8A          Fig. 8B          Fig. 8C

Fig. 9A          Fig. 9B          Fig. 9C

EP 3 278 173 B1

Fig. 10A

Fig. 10B

Fig. 10C

Fig. 11A         Fig. 11B         Fig. 11C

Fig. 12A          Fig. 12B          Fig. 12C

Fig. 13A       Fig. 13B       Fig. 13C

EP 3 278 173 B1

Fig. 14A

Fig. 14B

Fig. 15A

Fig. 15B

Fig. 16A          Fig. 16B          Fig. 16C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010052936 A1

- EP 1240541 B1

**In der Beschreibung aufgeführte Nicht-Patentliteratur**

- **H. DIEPES.** Refraktionsbestimmung. DOZ-Verlag, 2004, 396ff
- **K. JEREMIAS ; D. URECH.** Einstellastigmatis und Listing'sche Regel. *Projektarbeit 5, Fachhochschule Nordwestschweiz,* 2011

- **S. DEGLE.** Nahastigmatismus in Theorie und Praxis, Ursachen, Häufigkeit und Prüfmethoden. *Deutsche Optiker Zeitung DOZ, 07/2011,* Juli 2011, 56-58
- **D. METHING.** Bestimmen von Sehhilfen. 1996, 117